# EUROPÄISCHE PATENTSCHRIFT

(11) **EP 3 085 718 B1**
(45) Veröffentlichungstag und Bekanntmachung des Hinweises auf die Patenterteilung: **17.04.2024**
(21) Anmeldenummer: 16166427.1
(22) Anmeldetag: 21.04.2016
(51) Int. Cl.: C08G 18/73, C08G 18/71, C08G 18/79, C08G 18/80, C08G 18/02, C08G 18/18, C08G 18/22, C08G 18/28, C08G 18/32

(54) **POLYISOCYANURATKUNSTSTOFF ENTHALTEND SILOXANGRUPPEN UND VERFAHREN ZU DESSEN HERSTELLUNG**
SILOXANE GROUPS CONTAINING POLYISOCYANURATE PLASTIC AND METHOD FOR PRODUCING THE SAME
MATIERES SYNTHETIQUES DE POLYISOCYANURATE COMPRENANT DES GROUPES SILOXANE ET LEUR PROCEDE DE PRODUCTION

(30) Priorität: 21.04.2015 EP 15164518; 21.04.2015 EP 15164519; 21.04.2015 EP 15164520; 21.04.2015 EP 15164522
(43) Veröffentlichungstag der Anmeldung: 26.10.2016
(73) Patentinhaber: Covestro Deutschland AG, 51373 Leverkusen (DE)
(72) Erfinder: KLIMMASCH, Thomas, 51379 Leverkusen (DE); WEIKARD, Jan, 51375 Leverkusen (DE); LAAS, Hans-Josef, 51519 Odenthal (DE); KÖCHER, Jürgen, 40764 Langenfeld (DE)
(74) Vertreter: Levpat

(56) Entgegenhaltungen:
- WO-A1-2014/086530
- US-A- 4 514 525
- US-A- 6 133 397

## Beschreibung

Die Erfindung betrifft einen Siloxangruppen enthaltenden Polyisocyanuratkunststoff, ein Verfahren zu dessen Herstellung, dessen Verwendung zur Herstellung von Beschichtungen, Folien, Halbzeugen oder Formteilen sowie mit einer solchen Beschichtung beschichtete Substrate.

Siloxangruppen enthaltende Polyurethankunststoffe, die aus Alkoxysilylgruppen-haltigen Polyisocyanaten und Polyolen hergestellt werden, sind seit längerer Zeit bekannt. Sie werden insbesondere zur Herstellung von chemikalienbeständigen und kratzfesten Beschichtungen für die OEM-Serienlackierung und Automobilreparaturlackierung verwendet. Die Härtung solcher Beschichtungen erfolgt einerseits durch die Urethanisierungsreaktion der Isocyanatgruppen des Alkoxysilylgruppen-haltigen Polyisocyanats mit den Hydroxygruppen des Polyols und andererseits durch Hydrolyse und Kondensation der Alkoxysilylgruppen zu Siloxangruppen.

Die EP 1 273 640 A1 beschreibt einen lösemittelhaltigen wärmehärtenden Zweikomponenten-Polyurethan-Automobil-Klar- bzw. Decklack mit verbesserter Kratzbeständigkeit, der durch Einsatz von Silicium-modifizierten Polyisocyanaten als Isocyanat-Vernetzerkomponenten erhältlich ist. Die Silicium-modifizierten Polyisocyanate werden durch Umsetzung aliphatischer und/oder cycloaliphatischer Polyisocyanate mit N,N-Bis-(trialkoxysilylpropyl)-aminen erhalten. Alternativ können die Silicium-modifizierten Polyisocyanate auch durch partielle Umsetzung monomerer Diisocyanate, wie HDI oder IPDI, mit N,N-Bis-(trialkoxysilylpropyl)-aminen und nachträglicher Oligomerisierung hergestellt werden. Bei dieser letztgenannten Herstellungsmethode der Silicium-modifizierten Polyisocyanate entstehen durch die nachträgliche Oligomerisierung gezielt keine hochumgesetzten vernetzten, Siloxangruppen enthaltenden Polyisocyanuratkunststoffe sondern nur oligomere, niedrigviskose, lösliche Produkte.

Eine Reihe weiterer Veröffentlichungen, z. B. WO 2008/074489 A1 , WO 2008/074490 A1, WO 2010/149236 A1, WO 2014/086530 A1 und WO 2009/156148 A1, beschreiben ebenfalls Beschichtungsmittel zur Herstellung wetterstabiler, kratzfester Polyurethan-Klarlackschichten für die OEM-Serienlackierung und Automobilreparaturlackierung, bei denen als Isocyanat-Vernetzerkomponente Silicium-modifizierte Polyisocyanate zum Einsatz kommen.

Nachteilig ist hierbei in allen Fällen, dass sowohl Isocyanatgruppen und Hydroxylgruppen als auch Alkoxysilylgruppen und Hydroxylgruppen getrennt voneinander in unterschiedlichen Komponenten gelagert werden müssen und üblicherweise erst unmittelbar vor der Applikation miteinander vermischt werden, da die genannten Gruppen schon bei üblichen Lagerbedingungen miteinander reagieren können.

Die Härtung hochkratzfester Beschichtungen durch katalytische Kondensation von Alkoxysilylgruppen-haltigen Verbindungen ist beispielsweise in S. Hofacker et al., Progress in Organic Coatings 45 (2002), 159-164 beschrieben.

Da der Härtungsmechanismus der Alkoxysilylgruppen über eine Kondensationsreaktion unter Abspaltung des entsprechenden Alkohols läuft, findet ein erheblicher Volumenschrumpf statt. Es kann daher zu Spannungen, Rissen und Verlust von Adhäsion kommen. Weiterhin ist z.B. in der Beschichtungstechnik durch stark schrumpfende Beschichtungen das Telegrafieren von Rauigkeiten und Oberflächenstrukturen des Untergrunds bekannt, die zu Glanzverlust und anderen Störungen der Optik der Beschichtung führen können.

Die aus dem Stand der Technik bekannten Siloxangruppen enthaltenden Polyurethankunststoffe weisen somit den grundsätzlichen Nachteil auf, dass zur Erzielung hoher Netzwerkdichten entweder ein hoher Volumenschrumpf durch übermäßige Abspaltung von Bestandteilen während der Härtung in Kauf genommen werden muss oder bei Verwendung von Polyadditionsreaktionen (durch z.B. Urethanbildung), die Erzielung hoher Netzwerkdichten schwierig wird. Mindestens aber resultiert die Notwendigkeit, mit zwei Komponenten während der Lagerung zu hantieren.

Polymere mit Polyisocyanuratstruktur sind für ihre hohe mechanische Festigkeit bekannt. Die bisherigen aus dem Stand der Technik bekannten Verfahren zur Herstellung solcher hochumgesetzter Polyisocyanuratkunststoffe gehen dabei häufig von flüssigen monomeren Diisocyanaten aus. Aufgrund der hohen Wärmetönung der Trimerisierungsreaktion zu Polyisocyanuraten (-75 kJ/mol NCO), ist eine Reaktion ausgehend von monomeren Diisocyanaten, besonders bei monomeren Diisocyanaten mit hohem Isocyanatgehalt (z.B. BDI, PDI, HDI, TIN), typischerweise nicht im Großmaßstab sondern nur in kleinen Substanzmengen unter strikter Temperaturkontrolle möglich.

US 4,514,525 beschreibt die Herstellung von Polyisocyanuratschäumen basierend auf einem aromatischen Polyisocyanat und einem silikonbasierten Tensid. Dieses Tensid enthält keine Alkoxysilylgruppen und stellt somit keinen eigenständigen Vernetzungsmechanismus neben der Vernetzung der Isocyanatgruppen bereit.

WO 2015/166983 beschreibt die Verwendung von Polyisocyanuratkunststoffen für die Verkapselung von LEDs. Die Verwendung von Silicium-modifizierten Polyisocyanaten ist nicht offenbart.

US 6,133,397 beschreibt zwar die Verwendung von oligomeren Polyisocyanaten zum Aufbau von Beschichtungen, offenbart aber keine Silicium-modifizierten Beschichtungen.

Die Temperaturkontrolle bei der Herstellung von hochumgesetzten Polyisocyanuraten ist von enormer Bedeutung, da aufgrund der hohen Isocyanatgehalte der monomeren Ausgangsprodukte und der exotherm verlaufenden Reaktion Temperaturen von über 300 °C entstehen können, die zur direkten Zersetzung der Produkte und sogar zur in situ Verdampfung der monomeren Diisocyanate führen können. Neben den arbeitshygienischen Nachteilen durch die freigesetzten toxischen monomeren Diisocyanate oder Zersetzungsprodukte, ist dabei die Bildung von Blasen und Verfärbungen im fertigen Polyisocyanuratkunststoff sehr störend.

Praktische Anwendungen finden Polyisocyanurate daher bisher üblicherweise nur als Vernetzungsmittel in der Lackchemie, bei deren Herstellung die Trimerisierungsreaktion bereits bei niedrigen Umsätzen gestoppt wird und überschüssiges nicht abreagiertes monomeres Diisocyanat entfernt wird. So sehen die DE 31 00 263; GB 952 931, GB 966 338; US 3211703, US 3330828 bei der Herstellung von Vernetzungsmitteln auf Basis von Isocyanuraten ausgehend von aliphatischen und gemischt aliphatischen und aromatischen monomeren Diisocyanaten entweder eine Durchführung der Reaktion in Verdünnung oder nur bis zu niedrigen Umsatzwerten bei sehr genauer Temperaturkontrolle vor. Auch hier entstehen gezielt keine hochumgesetzten Polyisocyanuratkunststoffe sondern nur oligomere, niedrigviskose, lösliche Produkte.

Für eine Reihe von Anwendungen, beispielsweise für die Automobilreparaturlackierung, insbesondere die OEM-Serienlackierung, sowie für die Beschichtung von Unterhaltungselektronikgegenständen, insbesondere Laptops, Tablets und Mobiltelefonen, besteht im Markt eine stetige Nachfrage nach Beschichtungsmitteln mit weiter verbesserter Kratzbeständigkeit.

Aufgabe der vorliegenden Erfindung war es daher, neue Siloxangruppen enthaltende Polyisocyanuratkunststoffe mit verbesserten Eigenschaften, insbesondere erhöhter Kratz- und Chemikalienfestigkeit sowie Abriebbeständigkeit zur Verfügung zu stellen, die sich insbesondere für die Automobillackierung sowie für die Beschichtung von Unterhaltungselektronikgegenständen eignen und die sich einkomponentig verarbeiten lassen.

Diese Aufgabe wird erfindungsgemäß durch den in Anspruch 1 angegebenen Polyisocyanuratkunststoff, die in den Ansprüchen 14 bis 16 angegebenen Verwendungen und Erzeugnisse sowie das in Anspruch 17 angegebene Verfahren gelöst.

Vorteilhafte Ausgestaltungen der Erfindung sind in den abhängigen Ansprüchen angegeben und werden nachfolgend, wie der allgemeine Erfindungsgedanke, im Einzelnen erläutert.

Gegenstand der Erfindung ist ein Polyisocyanuratkunststoff enthaltend Siloxangruppen, erhältlich durch ein Verfahren umfassend die folgenden Schritte:
a1) Bereitstellen einer Zusammensetzung A), welche
   i) oligomere Polyisocyanate B) und Silicium-haltige Verbindungen C) enthält; oder
   ii) oligomere, Silicium-modifizierte Polyisocyanate D) enthält; oder
   iii) oligomere Silicium-modifizierte Polyisocyanate D) und oligomere Polyisocyanate B) enthält; oder
   iv) oligomere Polyisocyanate B), Silicium-haltige Verbindungen C) und modifizierte oligomere Polyisocyanate D) enthält; oder
   v) Silicium-haltige Verbindungen C) und Silicium-modifizierte, oligomere Polyisocyanate D) enthält;
a2) katalytische Trimerisierung der Zusammensetzung A);

wobei die Zusammensetzung A) einen Gehalt an monomeren Diisocyanaten von höchstens 20 Gew.-% aufweist;
wobei höchstens 20 % der ursprünglich in der Zusammensetzung A) enthaltenen Isocyanatgruppen erhalten geblieben sind;
wobei es sich bei den Silicium-haltigen Verbindungen C) um alkoxysilylgruppenhaltige Verbindungen C) handelt und es sich bei den oligomeren Silicium-modifizierten Polyisocyanaten D) um oligomere mit Alkoxysilylgruppen modifizierte Polyisocyanate D) handelt.

Gegenstand der Erfindung ist ferner auch das oben genannte Verfahren aus dem die erfindungsgemäßen Polyisocyanuratkunststoffe erhältlich sind. Darüber hinaus ist Gegenstand der Erfindung auch die Verwendung der erfindungsgemäßen Polyisocyanuratkunststoffe zur Herstellung von Beschichtungen, Folien, Halbzeugen und Formteilen sowie mit dem erfindungsgemäßen Polyisocyanuratkunststoff beschichtete Substrate.

Die nachfolgend näher beschriebene Erfindung beruht auf der überraschenden Beobachtung, dass sich eine Zusammensetzung, enthaltend oligomere Polyisocyanate und Silicium-haltige Verbindungen und/oder oligomere, Silicium-modifizierte Polyisocyanate durch katalytische Trimerisierung derart aushärten lässt, dass neben oder vor Hydrolyse bzw. Kondensation Silicium-haltiger funktioneller Gruppen der Silicium-haltigen Verbindungen und/oder der Silicium-modifizierten Polyisocyanate zu Siloxangruppen, Isocyanat-Gruppen der oligomeren Polyisocyanate und/oder der Silicium-modifizierten Polyisocyanate durch Trimerisierung zu Polyisocyanuraten reagieren, so dass hochvernetzte hochumgesetzte Polyisocyanuratkunststoffe mit neuartigen Eigenschaften entstehen. Dieser duale Härtungsmechanismus führt zu einer neuartigen Vernetzungsstruktur im erhältlichen Polyisocyanuratkunststoff, der sich dadurch strukturell von den aus dem Stand der Technik bekannten Materialien unterscheidet.

Die Verwendung von Zusammensetzungen, enthaltend oligomere Polyisocyanate und Silicium-haltige Verbindungen und/oder oligomere, Silicium-modifizierte Polyisocyanate, anstelle monomerer Diisocyanate als Ausgangsmaterialien zur Herstellung von Polyisocyanuratkunststoffen hat darüber hinaus den Vorteil, dass aufgrund der niedrigeren Isocyanatgehalte der oligomeren Edukte eine deutlich geringere Reaktionswärme während des Aushärtens abzuführen ist, was insbesondere auch die Herstellung großvolumiger Bauteile erleichtert.

Ein "Polyisocyanuratkunststoff", wie hier verwendet, ist ein Kunststoff, der Polyisocyanurat enthält. Er kann auch vorwiegend aus einem Polyisocyanurat bestehen. Blends aus Polyisocyanuraten und anderen Kunststoffen fallen ebenfalls unter den Begriff "Polyisocyanuratkunststoff", wie hier verwendet.

Wenn hier von "Kunststoff" die Rede ist, so ist damit ein Produkt gemeint, welches bei Raumtemperatur - im Gegensatz zu beispielsweise Gelen oder Flüssigkeiten - weitestgehend formbeständig ist. Der Begriff "Kunststoff", wie hier verwendet, umfasst alle üblichen Kunststoffklassen, d.h. insbesondere auch Duroplaste, Thermoplaste und Elastomere.

Ein "Polyisocyanurat", wie hier verwendet, ist jedes Molekül, vorzugsweise ein Polymer, welches eine Pluralität an Isocyanurat Struktureinheiten, beispielsweise mindestens 10 Isocyanurat Struktureinheiten, aufweist. Ein Molekül mit einer einzigen Isocyanurat Struktureinheit kann als "Isocyanurat" bezeichnet werden.

Die charakteristische, zyklische Isocyanurat Struktureinheit ist in folgender Strukturformel wiedergegeben:

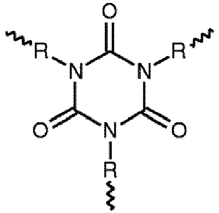

Isocyanurate und Polyisocyanurate lassen sich durch Cyclotrimerisierung von Polyisocyanaten erhalten. Die klassischerweise betriebene Cyclotrimerisierung ausgehend von monomeren Diisocyanaten ist - wie oben beschrieben - eine stark exotherm verlaufenden Reaktion. Dies kann die Anwendungsmöglichkeiten sowie die technisch und effizient noch realisierbaren Trimerisierungsgrade erheblich einschränken.

Der Begriff "Polyisocyanat", wie hier verwendet, ist eine Sammelbezeichnung für Verbindungen, die im Molekül zwei oder mehrere Isocyanat-Gruppen (hierunter versteht der Fachmann freie Isocyanat-Gruppen der allgemeinen Struktur -N=C=O) enthalten. Einfachste und wichtigste Vertreter dieser Polyisocyanate sind die Diisocyanate. Diese haben die allgemeinen Struktur O=C=N-R-N=C=O, wobei R üblicherweise für aliphatische, alicyclische und/oder aromatische Reste steht.

Aus Polyisocyanaten lassen sich wegen der Mehrfachfunktionalität (≥ 2 Isocyanat-Gruppen) eine Vielzahl von Polymeren (z.B. Polyurethane, Polyharnstoffe und Polyisocyanurate) und niedermolekularen Verbindungen (z.B. solche mit Uretdion-, Isocyanurat-, Allophanat-, Biuret-, Iminooxadiazindion- und/oder Oxadiazintrionstruktur) herstellen.

Wenn hier allgemein von "Polyisocyanaten" die Rede ist, so sind damit monomere und/oder oligomere Polyisocyanate gleichermaßen gemeint. Zum Verständnis vieler Aspekte der Erfindung ist es jedoch wichtig, zwischen monomeren Diisocyanaten und oligomeren Polyisocyanaten zu unterscheiden. Wenn hier von "oligomeren Polyisocyanaten" die Rede ist, dann sind damit Polyisocyanate gemeint, die aus mindestens zwei monomeren Diisocyanatmolekülen aufgebaut sind, d.h. es sind Verbindungen, die ein Reaktionsprodukt aus mindestens zwei monomeren Diisocyanatmolekülen darstellen oder enthalten.

Die Herstellung oligomerer Polyisocyanate aus monomeren Diisocyanaten wird hier auch als Oligomerisierung monomerer Diisocyanate bezeichnet. Diese "Oligomerisierung", wie hier verwendet, bedeutet dabei die Reaktion monomerer Diisocyanate zu oligomeren Polyisocyanaten mit Uretdion-, Isocyanurat-, Allophanat-, Thioallophanat-, Biuret-, Iminooxadiazindion- und/oder Oxadiazintrionstruktur.

So ist z.B. Hexamethylendiisocyanat (HDI) ein "monomeres Diisocyanat", da es zwei Isocyanat-Gruppen enthält und kein Reaktionsprodukt aus mindestens zwei Polyisocyanatmolekülen darstellt:

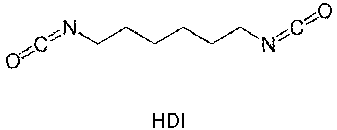

Reaktionsprodukte aus mindestens zwei HDI-Molekülen, die immer noch über mindestens zwei Isocyanat-Gruppen verfügen, sind demgegenüber "oligomere Polyisocyanate" im Sinne der Erfindung. Vertreter solcher "oligomerer Polyisocyanate" sind ausgehend von dem monomeren HDI z.B. das HDI-Isocyanurat und das HDI-Biuret, die jeweils aus drei monomeren HDI Bausteinen aufgebaut sind:

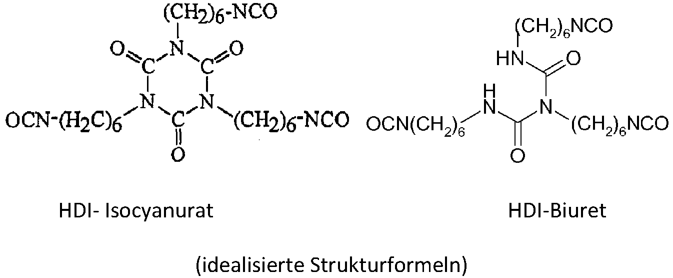

Im Rahmen der Erfindung wird als "Siloxangruppe" eine Gruppe bezeichnet, die durch Hydrolyse bzw. Kondensation Silicium-haltiger funktioneller Gruppen der Silicium-haltigen Verbindungen und/oder der Silicium-modifizierten Polyisocyanate entsteht. Der Begriff "Siloxan", wie hier verwendet, ist eine Bezeichnung für Verbindungen, die die allgemeine Struktur -[SiR₂-O-SiR₂]ₙ- aufweisen, wobei R üblicherweise für ein Wasserstoffatom eine Alkylgruppe, eine Alkoxygruppe oder einen Rest -O-SiR₂- mit der für R genannten Bedeutung steht.

Der erfindungsgemäße Polyisocyanuratkunststoff enthaltend Siloxangruppen ist durch das erfindungsgemäße Verfahren erhältlich. Im Folgenden werden daher Ausführungsformen beschrieben, die sowohl auf den durch das erfindungsgemäße Verfahren erhältlichen erfindungsgemäßen Polyisocyanuratkunststoff enthaltend Siloxangruppen als auch auf das erfindungsgemäße Verfahren als solches zutreffen.

Erfindungsgemäß ist die als Edukt für die Herstellung des erfindungsgemäßen Siloxangruppen enthaltenden Polyisocyanuratkunststoffs eingesetzte Zusammensetzung A) monomerarm (d.h. arm an monomeren Diisocyanaten) und enthält bereits oligomere Polyisocyanate B), Silicium-haltige Verbindungen C) oder oligomere Silicium-modifizierte Polyisocyanate D) oder oligomere Silicium-modifizierte Polyisocyanate D) und oligomere Polyisocyanate B) oder oligomere Polyisocyanate B), Silicium-haltige Verbindungen C) und modifizierte oligomere Polyisocyanate D) oder Silicium-haltige Verbindungen C) und Silicium-modifizierte, oligomere Polyisocyanate D).

Gemäß einer Ausführungsform der Erfindung liegen in der Zusammensetzung A) oligomere Polyisocyanate B), Silicium-haltige Verbindungen C) und/oder oligomere Silicium-modifizierte Polyisocyanate D) in solchen Mengen vor, dass die Zusammensetzung A) einen NCO-Gehalt von 5,0 bis 23,5 Gew.-% und einen Silicium-Gehalt (berechnet mit einem Si, Molekulargewicht von 28 g/mol) von 0,1 bis 30 Gew.-% aufweist.

Die erfindungsgemäß vorgesehene Anwesenheit von oligomeren Polyisocyanaten B), Silicium-haltigen Verbindungen C) bzw. oligomeren, Silicium-modifizierten Polyisocyanaten D) und die sich hieraus ergebenden NCO- und Si-Gehalte beziehen sich auf die ursprünglich, d.h. vor Beginn der katalytischen Trimerisierung, bereitgestellte Zusammensetzung A).

Bei dem erfindungsgemäßen Verfahren entstehen Siloxangruppen enthaltende Polyisocyanuratkunststoffe mit einer homogenen Verteilung der Siloxangruppen im Polyisocyanuratkunststoff, d.h. es liegt als Produkt kein Polyisocyanuratkunststoff vor, der ausschließlich an der Oberfläche mit Silicium-haltigen Verbindungen C) modifiziert ist.

"Monomerarm" und "arm an monomeren Diisocyanaten" wird hier in Bezug auf die Zusammensetzung A) synonym verwendet.

Besonders praxisgerechte Ergebnisse stellen sich ein, wenn die Zusammensetzung A) einen Anteil an monomeren Diisocyanaten in der Zusammensetzung A) von höchstens 20 Gew.-%, insbesondere höchstens 15 Gew.-% oder höchstens 10 Gew.-%, jeweils bezogen auf das Gewicht der Zusammensetzung A), aufweist. Vorzugsweise weist die Zusammensetzung A) einen Gehalt an monomeren Diisocyanaten von höchstens 5 Gew.-%, vorzugsweise höchstens 2,0 Gew.-%, besonders bevorzugt höchstens 1,0 Gew.-%, jeweils bezogen auf das Gewicht der Zusammensetzung A), auf. Besonders gute Ergebnisse stellen sich ein, wenn die Zusammensetzung A) im Wesentlichen frei von monomeren Diisocyanaten ist. Im Wesentlichen frei bedeutet dabei, dass der Gehalt an monomeren Diisocyanaten höchstens 0,5 Gew.-%, bezogen auf das Gewicht der Zusammensetzung A), beträgt.

Erfindungswesentlich ist, dass die eingesetzte Zusammensetzung A) monomerarm ist. In der Praxis lässt sich dies insbesondere dadurch erzielen, dass die Zusammensetzung A) oligomere Polyisocyanate B) und/oder oligomere Silicium-modifizierte Polyisocyanate D) enthält, bei deren Herstellung sich an die eigentliche Oligomerisierungsreaktion in jedem Fall mindestens ein weiterer Verfahrensschritt zur Abtrennung der nicht umgesetzten überschüssigen monomeren Diisocyanate bzw. monomeren, Silicium-modifizierten Diisocyanate anschließt. Diese Monomerenabtrennung kann besonders praxisgerecht nach an sich bekannten Verfahren vorzugsweise durch Dünnschichtdestillation im Hochvakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan, erfolgen.

Gemäß einer bevorzugten Ausführungsform der Erfindung werden die oligomeren Polyisocyanate B) durch Oligomerisierung monomerer Diisocyanate mit anschließender Abtrennung nicht umgesetzter Monomere erhalten.

Die im Stand der Technik beschriebenen Verfahren zur Herstellung von Polyisocyanuratkunststoffen setzen weitestgehend monomere Diisocyanate als Edukte ein, d.h. es werden reine monomere Diisocyanate oder monomerreiche Polyisocyanatzusammensetzungen katalytisch trimerisiert. Im Gegensatz hierzu führt der erfindungsgemäße Einsatz bzw. die "Bereitstellung" einer monomerarmen Zusammensetzung A), welche bereits oligomere Polyisocyanate B) und/oder oligomere, Silicium-modifizierte Polyisocyanate D) enthält, überraschenderweise zu einem deutlich geringeren Volumenschrumpf. Die geringere Exothermie der erfindungsgemäßen Reaktion erlaubt es zudem, hochumgesetzte Polyisocyanuratkunststoffe zu erhalten.

Vorzugsweise wird bei der erfindungsgemäßen Trimerisierungsreaktion kein monomeres Diisocyanat mitverwendet. Gemäß einer besonderen Ausführungsform der Erfindung kann jedoch die Zusammensetzung A) ein monomeres Fremddiisocyanat enthalten. Hierbei bedeutet monomeres Fremddiisocyanat, dass es sich von den monomeren Diisocyanaten, die zur Herstellung der in der Zusammensetzung A) enthaltenen oligomeren Polyisocyanate B) und/oder der oligomeren Silicium-modifizierten Polyisocyanate D) verwendet wurden, unterscheidet. Eine Zugabe von monomerem Fremddiisocyanat kann zur Erzielung spezieller technischer Effekte, wie z.B. einer besonderen Härte vorteilhaft sein. Besonders praxisgerechte Ergebnisse stellen sich ein, wenn die Zusammensetzung A) einen Anteil an monomeren Fremddiisocyanat in der Zusammensetzung A) von höchstens 20 Gew.-%, insbesondere höchstens 15 Gew.-% oder höchstens 10 Gew.-%, jeweils bezogen auf das Gewicht der Zusammensetzung A), aufweist. Vorzugsweise weist die Zusammensetzung A) einen Gehalt an monomeren Fremddiisocyanat von höchstens 5 Gew.-%, vorzugsweise höchstens 2,0 Gew.-%, besonders bevorzugt höchstens 1,0 Gew.-%, jeweils bezogen auf das Gewicht der Zusammensetzung A), auf.

Gemäß einer weiteren besonderen Ausführungsform der Erfindung, kann die Zusammensetzung A) monomere Monoisocyanate oder monomere Isocyanate mit einer Isocyanatfunktionalität größer zwei, d.h. mit mehr als zwei Isocyanatgruppen pro Molekül, enthalten. Die Zugabe von monomeren Monoisocyanaten oder monomeren Isocyanaten mit einer Isocyanatfunktionalität größer zwei hat sich als vorteilhaft erwiesen, um die Netzwerkdichte des Polyisocyanuratkunststoffs zu beeinflussen. Besonders praxisgerechte Ergebnisse stellen sich ein, wenn die Zusammensetzung A) einen Anteil an monomeren Monoisocyanaten oder monomeren Isocyanaten mit einer Isocyanatfunktionalität größer zwei in der Zusammensetzung A) von höchstens 20 Gew.-%, insbesondere höchstens 15 Gew.-% oder höchstens 10 Gew.-%, jeweils bezogen auf das Gewicht der Zusammensetzung A), aufweist. Vorzugsweise weist die Zusammensetzung A) einen Gehalt an monomeren Monoisocyanaten oder monomeren Isocyanaten mit einer Isocyanatfunktionalität größer zwei von höchstens 5 Gew.-%, vorzugsweise höchstens 2,0 Gew.-%, besonders bevorzugt höchstens 1,0 Gew.-%, jeweils bezogen auf das Gewicht der Zusammensetzung A), auf. Vorzugsweise wird bei der erfindungsgemäßen Trimerisierungsreaktion kein monomeres Monoisocyanat oder monomeres Isocyanat mit einer Isocyanatfunktionalität größer zwei mitverwendet.

Die oligomeren Polyisocyanate B) werden üblicherweise durch Oligomerisierung einfacher aliphatischer, cycloaliphatischer, araliphatischer und/oder aromatischer monomerer Diisocyanate oder Mischungen solcher monomeren Diisocyanate erhalten.

Die oligomeren Polyisocyanate B) und/oder oligomere Silicium-modifizierten Polyisocyanate D) können erfindungsgemäß insbesondere Uretdion-, Isocyanurat-, Allophanat-, Thioallophanat-, Biuret-, Iminooxadiazindion- und/oder Oxadiazintrionstruktur aufweisen. Gemäß einer Ausführungsform der Erfindung weisen die oligomeren Polyisocyanate B) und/oder oligomere Silicium-modifizierte Polyisocyanate D) mindestens eine der folgenden oligomeren Strukturtypen oder deren Gemische auf:

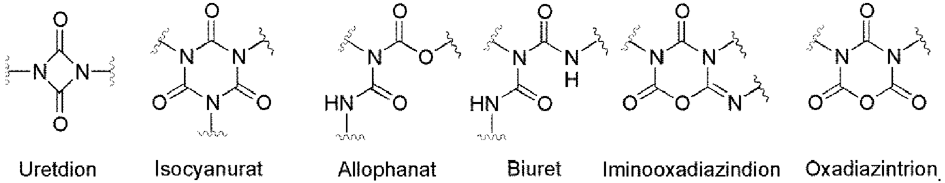

In einer besonders bevorzugten Ausführungsform der Erfindung, enthalten die oligomeren Polyisocyanate B) wenigstens eine Struktur ausgewählt aus der Gruppe bestehend aus Uretdion, Isocyanurat, Biuret, Iminooxadiazindion und Oxadiazintrion, sind aber im Wesentlichen allophanatfrei. Der Begriff "allophanatfrei" bedeutet in diesem Zusammenhang, dass das molare Verhältnis von Allophanatgruppen zu allen im oligomeren Polyisocyanat B) vorliegenden vorgenannten Gruppen vorzugsweise weniger als 1:99 beträgt. Stärker bevorzugt liegt das molare Verhältnis von Allophant- zu IsocyanuratGruppen unter 1:99. Besonders bevorzugt enthält das oligomere Polyisocyanat B) keine Allophanatgruppe. Alle anderen oben bezüglich des oligomeren Polyisocyanats B) gegebenen Definitionen gelten auch für diese Ausführungsform.

Überraschend hat sich herausgestellt, dass es vorteilhaft sein kann, oligomere Polyisocyanate B) und/oder oligomere Silicium-modifizierte Polyisocyanate D) einzusetzen, die eine Mischung aus mindestens zwei oligomeren Polyisocyanaten B) und/oder mindestens zwei oligomeren Silicium-modifizierten Polyisocyanaten D) darstellen, wobei sich die mindestens zwei oligomeren Polyisocyanate B) und/oder die mindestens zwei oligomeren Silicium-modifizierten Polyisocyanate D) in ihrer Struktur unterscheiden. Diese ist vorzugsweise ausgewählt aus der Gruppe bestehend aus Uretdion-, Isocyanurat-, Allophanat-, Thioallophanat-, Biuret-, Iminooxadiazindion- und Oxadiazintrionstruktur und deren Mischungen. Derartige Ausgangsmischungen können insbesondere im Vergleich zu Trimerisierungsreaktionen mit oligomeren Polyisocyanaten B) und/oder oligomeren Silicium-modifizierten Polyisocyanaten D) nur einer definierten Struktur zu einer Beeinflussung des Tg-Wertes führen, was für viele Anwendungen vorteilhaft ist.

Bevorzugt wird erfindungsgemäß eine Zusammensetzung A), die oligomere Polyisocyanate B) und/oder oligomere Silicium-modifizierte Polyisocyanate D) mit Biuret-, Allophanat-, Thioallophanat-, Isocyanurat-, und/oder Iminooxadiazindionstruktur und Mischungen davon enthält, eingesetzt.

Gemäß einer anderen Ausführungsform handelt es sich bei der Zusammensetzung A) um eine solche, die oligomere Polyisocyanate B) und/oder oligomere Silicium-modifizierte Polyisocyanate D) nur einer einzelnen definierten oligomeren Struktur, beispielsweise ausschließlich oder größtenteils Isocyanuratstruktur, enthält. In der Regel liegen in der Zusammensetzung A) herstellungsbedingt aber immer oligomere Polyisocyanate B) und/oder oligomere Silicium-modifizierte Polyisocyanate D) mehrerer unterschiedlicher oligomerer Strukturen nebeneinander vor.

Erfindungsgemäß werden gemäß einer weiteren Ausführungsform oligomere Polyisocyanate B) und/oder oligomere Silicium-modifizierte Polyisocyanate D) einer einzelnen definierten oligomeren Struktur eingesetzt, wobei die oligomere Struktur aus Uretdion-, Isocyanurat-, Allophanat-, Thioallophanat-, Biuret-, Iminooxadiazindion- und/oder Oxadiazintrionstruktur ausgewählt ist.

Gemäß einer weiteren Ausführungsform handelt es sich bei den oligomeren Polyisocyanaten B) und/oder oligomeren Silicium-modifizierten Polyisocyanaten D) um solche, die hauptsächlich Isocyanuratstruktur aufweisen, und die oben genannten Uretdion-, Allophanat-, Thioallophanat-, Biuret-, Iminooxadiazindion- und/oder Oxadiazintrionstruktur lediglich als Nebenprodukte enthalten dürfen.

Es ist erfindungsgemäß ebenfalls möglich oligomere Polyisocyanate B) und/oder oligomere Silicium-modifizierte Polyisocyanate D) einzusetzen, die weitestgehend keine Isocyanuratstruktur aufweisen, und hauptsächlich mindestens einen der oben genannten Uretdion-, Allophanat-, Biuret-, Iminooxadiazindion- und/oder Oxadiazintrion-Strukturtypen enthalten. Gemäß einer besonderen Ausführungsform der Erfindung enthält die Zusammensetzung A) oligomere Polyisocyanate B) und/oder oligomere, Silicium-modifizierte Polyisocyanate D), die einen Strukturtyp ausgewählt aus der Gruppe bestehend aus Uretdion-, Allophanat-, Thioallophanat-, Biuret-, Iminooxadiazindion- und/oder Oxadiazintrionstruktur aufweisen.

Die Uretdion-, Isocyanurat-, Allophanat-, Thioallophanat-, Biuret-, Iminooxadiazindion- und/oder Oxadiazintrionstruktur in den oligomeren Polyisocyanaten B) und/oder den oligomeren Silicium-modifizierten Polyisocyanaten D) kann z.B. durch NMR-Spektroskopie bestimmt werden. Bevorzugt lässt sich hierbei die ¹³C-NMR-Spektroskopie, vorzugsweise protonenentkoppelt, einsetzen, da die genannten oligomeren Strukturen charakteristische Signale liefern.

Unabhängig vom zugrunde liegenden oligomeren Strukturtyp (Uretdion-, Isocyanurat-, Allophanat-, Thioallophanat-, Biuret-, Iminooxadiazindion- und/oder Oxadiazintrionstruktur) weisen die erfindungsgemäß in der Zusammensetzung A) enthaltenen oligomeren Polyisocyanate B) vorzugsweise eine (mittlere) NCO-Funktionalität von 2,0 bis 5,0, vorzugsweise von 2,3 bis 4,5 auf. Die in der Zusammensetzung A) erfindungsgemäß enthaltenen oligomeren, Silicium-modifizierten Polyisocyanate D) weisen unabhängig vom zugrunde liegenden oligomeren Strukturtyp (Uretdion-, Isocyanurat-, Allophanat-, Thioallophanat-, Biuret-, Iminooxadiazindion- und/oder Oxadiazintrionstruktur) vorzugsweise eine (mittlere) NCO-Funktionalität von 1,8 bis 6,0, vorzugsweise von 2,0 bis 5,0 auf.

Besonders praxisgerechte Ergebnisse stellen sich ein, wenn die erfindungsgemäß einzusetzende Zusammensetzung A) einen Gehalt an Isocyanatgruppen von 6,0 bis 23,0 Gew.-% aufweist. Als besonders praxisgerecht hat es sich erwiesen, wenn die erfindungsgemäße Zusammensetzung A) einen Gehalt an Isocyanatgruppen von 10,0 bis 21,5 Gew.-%, jeweils bezogen auf das Gewicht der Zusammensetzung A), aufweist.

Herstellverfahren für die in der monomerarmen Zusammensetzung A) erfindungsgemäß einzusetzenden oligomeren Polyisocyanate B) mit Uretdion-, Isocyanurat-, Allophanat-, Thioallophanat-, Biuret-, Iminooxadiazindion- und/oder Oxadiazintrionstruktur sind beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 beschrieben.

Gemäß einer zusätzlichen oder alternativen Ausführungsform der Erfindung ist die erfindungsgemäße Zusammensetzung A) dadurch definiert, dass sie oligomere Polyisocyanate B) enthält, die aus monomeren Diisocyanaten unabhängig von der Art der verwendeten Oligomerisierungsreaktion unter Einhaltung eines Oligomerisierungsgrades von 5 bis 45 %, vorzugsweise 10 bis 40 %, besonders bevorzugt 15 bis 30 %, erhalten wurden. Unter "Oligomerisierungsgrad" ist dabei der Prozentsatz der in der Ausgangsmischung ursprünglich vorhandenen Isocyanatgruppen zu verstehen, der während des Herstellprozesses unter Bildung von Uretdion-, Isocyanurat-, Allophanat-, Biuret-, Iminooxadiazindion- und/oder Oxadiazintrionstrukturen verbraucht wird.

Geeignete monomere Polyisocyanate zur Herstellung der oligomeren Polyisocyanate B) sind beliebige, auf verschiedene Weise, beispielsweise durch Phosgenierung in der Flüssig- oder Gasphase oder auf phosgenfreien Weg, wie z.B. durch thermische Urethanspaltung, zugängliche Polyisocyanate. Besonders gute Ergebnisse stellen sich ein, wenn es sich bei den Polyisocyanaten um monomere Diisocyanate handelt. Bevorzugte monomere Diisocyanate sind solche, die ein Molekulargewicht im Bereich von 140 bis 400 g/mol aufweisen, mit aliphatisch, cycloaliphatisch, araliphatisch und/oder aromatisch gebundenen Isocyanatgruppen, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-lsocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1 '-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol (Xyxlylendiisocyanat; XDI), 1,3- und 1,4-Bis(1-isocyanato-1-methylethyl)-benzol (TMXDI) und Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin sowie beliebige Gemische solcher Diisocyanate. Weitere ebenfalls geeignete Diisocyanate finden sich darüber hinaus beispielsweise in Justus Liebigs Annalen der Chemie Band 562 (1949) S. 75 - 136*.*

Ferner können erfindungsgemäß auch klassische aliphatische oder aromatische Isocyanat-Endgruppentragende Prepolymere, wie beispielsweise aliphatische oder aromatische Isocyanat- Endgruppentragende Polyether-, Polyester-, Polycarbonat-Prepolymere als Mono- und Polyisocyanate in der Zusammensetzung A) eingesetzt werden.

Geeignete monomere Monoisocyanate, die in der Zusammensetzung A) gegebenenfalls eingesetzt werden können, sind beispielsweise n-Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetyl isocyanat, Stearylisocyanat, Cyclopentylisocyanat, Cyclohexylisocyanat, 3- bzw. 4-Methylcyclohexylisocyanat oder beliebige Gemische solcher Monoisocyanate. Als monomeres Isocyanat mit einer Isocyanatfunktionalität größer zwei, das der Zusammensetzung A) gegebenenfalls zugesetzt werden kann, sei beispielhaft 4-Isocyanatomethyl-1,8-octandiisocyanat (Triisocyanatononan; TIN) genannt.

Gemäß einer Ausführungsform der Erfindung enthält die Zusammensetzung A) höchstens 30 Gew.-%, insbesondere höchstens 20 Gew.-%, höchstens 15 Gew.-%, höchstens 10 Gew.-%, höchstens 5 Gew.-% oder höchstens 1 Gew.-%, jeweils bezogen auf das Gewicht der Zusammensetzung A), an aromatischen Polyisocyanaten. Wie hier verwendet, bedeutet "aromatisches Polyisocyanat" ein Polyisocyanat, welches mindestens eine aromatisch gebundene Isocyanatgruppe aufweist.

Unter aromatisch gebundenen Isocyanat-Gruppen werden Isocyanat-Gruppen verstanden, die an einen aromatischen Kohlenwasserstoffrest gebunden sind.

Gemäß einer bevorzugten Ausführungsform der Erfindung wird eine Zusammensetzung A) eingesetzt, die ausschließlich aliphatisch und/oder cycloaliphatisch gebundene Isocyanat-Gruppen aufweist.

Unter aliphatisch bzw. cycloaliphatisch gebundenen Isocyanat-Gruppen werden Isocyanat-Gruppen verstanden, die an einen aliphatischen bzw. cycloaliphatischen Kohlenwasserstoffrest gebunden sind.

Gemäß einer anderen bevorzugten Ausführungsform der Erfindung wird eine Zusammensetzung A) eingesetzt, die ein oder mehrere oligomere Polyisocyanaten B) enthält, wobei die ein oder mehrere oligomeren Polyisocyanate B) ausschließlich aliphatisch und/oder cycloaliphatisch gebundene Isocyanat-Gruppen aufweisen. Praktische Versuche haben gezeigt, dass sich besonders gute Ergebnisse mit Zusammensetzungen A) erzielen lassen, bei denen die darin enthaltenen oligomeren Polyisocyanate ausschließlich aliphatisch und/oder cycloaliphatisch gebundene Isocyanat-Gruppen aufweisen.

Gemäß einer besonders bevorzugten Ausführungsform der Erfindung wird eine Zusammensetzung A) eingesetzt, die ein oder mehrere oligomere Polyisocyanaten B) enthält, wobei die ein oder mehreren oligomeren Polyisocyanate auf Basis von 1,5-Diisocyanatopentan (PDI), 1,6-Diisocyanatohexan (HDI), Isophorondiisocyanat (IPDI) oder 4,4'-Diisocyanatodicyclohexylmethan (H12MDI) oder deren Mischungen aufgebaut sind.

Die bei der katalytischen Trimerisierung in der Zusammensetzung A) eingesetzten oligomeren Polyisocyanate B) weisen vorzugsweise eine geringe Viskosität auf. Wenn hier von "geringer Viskosität" die Rede ist, so ist damit gemeint, dass die oligomeren Polyisocyanate B) bei Raumtemperatur eine Viskosität aufweisen, die sich unterhalb des Gelpunkts der oligomeren Polyisocyanate B) befindet, d.h. die oligomeren Polyisocyanate B) liegen als Flüssigkeit und nicht als Gel vor. Als Gelpunkt wird dabei der Zeitpunkt verstanden, an dem die Vernetzungsdichte der oligomeren Polyisocyanate B) so weit fortgeschritten ist, dass die Viskosität der oligomeren Polyisocyanate B) schlagartig ansteigt und die oligomeren Polyisocyanate B) zu einem Polyisocyanurat-Bulkmaterial gelieren, d.h. sich nicht mehr wesentlich verformen oder fließen.

Die oligomeren Silicium-modifizierten Polyisocyanate D) werden üblicherweise durch Oligomerisierung einfacher aliphatischer, cycloaliphatischer, araliphatischer und/oder aromatischer, monomerer Diisocyanate, wie sie vorstehend als Ausgangsdiisocyanate für die Herstellung der oligomeren Polyisocyanate B) beschrieben sind, im Gemisch mit Silicium-modifizierten Diisocyanaten und/oder Isocyanatoalkysilanen oder durch partielle Umsetzung oligomerer Polyisocyanaten B) mit gegenüber Isocyanatgruppen reaktiven Silicium-haltigen Verbindungen C) erhalten. Die Begriffe "partielle Umsetzung mit Silicium-haltigen Verbindungen" oder "Silicium-modifiziert" werden im Sinne der Erfindung austauschbar verwendet und bedeuten insbesondere, dass 1 bis 99,9 mol-%, vorzugsweise 5 bis 80 mol%, besonders bevorzugt 10 bis 50 mol%, ganz besonders bevorzugt 15 bis 40 mol% der im oligomeren Polyisocyanat oder im Diisocyanat ursprünglich vorhandenen Isocyanatgruppen mit Silicium-haltigen Verbindungen C) umgesetzt wurden. Anders ausgedrückt weisen die durch partielle Umsetzung von oligomeren Polyisocyanaten B) mit Silicium-haltigen Verbindungen C) hergestellten oligomeren, Silicium-modifizierten Polyisocyanate D) einen Isocyanatgehalt von 99,0 bis 0,1 mol-%, vorzugsweise 95 bis 20 mol%, besonders bevorzugt 90 bis 50 mol%, ganz besonders bevorzugt 85 bis 60 mol%. bezogen auf die ursprünglich vorhandenen Isocyanatgruppen der oligomeren Polyisocyanate B) auf.

Herstellverfahren für die in der monomerarmen Zusammensetzung A) erfindungsgemäß einzusetzenden durch Umsetzung oligomerer Polyisocyanate B) mit gegenüber Isocyanatgruppen reaktiven Silicium-haltigen Verbindungen C) erhältlichen oligomeren, Silicium-modifizierten Polyisocyanate D) mit Uretdion-, Isocyanurat-, Allophanat-, Biuret-, Iminooxadiazindion- und/oder Oxadiazintrionstruktur sind beispielsweise in EP-A 1 273 640, WO-A 2008/074490, WO-A 2008/074489, WO-A 2014/086530, WO-A 2010/149236, WO-A 2009/156148 beschrieben.

Weitere oligomere, Silicium-modifizierte Polyisocyanate D) sind beispielsweise auch die in der EP-A 2 014 692 und EP-A 2 305 691 beschriebenen, durch Umsetzung von Silangruppen enthaltenden Hydroxyurethanen bzw. Hydroxyamiden mit überschüssigen Mengen monomerer Diisocyanate erhältlichen Allophanat- und Silangruppen enthaltenden Polyisocyanate.

Weitere oligomere, Silicium-modifizierte Polyisocyanate D) sind beispielsweise auch die nach dem Verfahren der WO 2005/070942 durch Umsetzung von Aminosilanen mit HDI erhältichen Alkoxysilan-funktionellen Biuretpolyisocyanate.

Darüber hinaus können in der monomerarmen Zusammensetzung A) erfindungsgemäß als oligomere, Silicium-modifizierte Polyisocyanate D) auch die in der nicht vorveröffentlichten eigenen Patentanmeldung BMS 141043-EP (Application No: 14 172 295.9) beschriebenen Silangruppen enthaltenden Thioallophanatpolyisocyanate eingesetzt werden.

Die Silicium-haltige Verbindung C) muss keine mit Isocyanatgruppen reaktive funktionelle Gruppe aufweisen.

Gegenüber Isocyanatgruppen inerte Silicium-haltige Verbindungen C) sind beispielsweise Reaktionsprodukte von Diisocyanaten oder oligomeren Polyisocyanaten, bei denen die ursprünglich vorhandenen Isocyanatgruppen vollständig mit gegenüber Isocyanatgruppen reaktiven Silicium-haltigen Verbindungen C) umgesetzt wurden. Beispiele für solche Silicium-haltigen Verbindungen C) sind beispielsweise die in der WO 2006/042584 und WO 2007/033786 beschriebenen isocyanatfreien Umsetzungsprodukte monomerer Diisocyanate bzw. oligomerer Polyisocyanate mit sekundären Aminosilanen.

Ein weiterer Typ gegenüber Isocyanatgruppen inerter Silicium-haltiger Verbindungen C) sind auch Reaktionsprodukte von isocyanatfunktionellen Silanbausteinen mit mindestens äquimolaren Mengen hydroxy- und/oder aminofunktioneller Verbindungen. Beispiele für solche Silicium-haltigen Verbindungen C) sind beispielsweise die in der WO 2008/034409 oder WO 2013/189882 beschriebenen Umsetzungsprodukte von Isocyanatoalkylalkoxysilanen mit Diolen oder Polyolen oder die in der WO 2014/037265 beschriebenen Umsetzungsprodukte von Diolen und/oder Polyolen mit speziellen Thiourethangruppen enthaltenden Isocyanatosilanen.

Gemäß einer bevorzugten Ausführungsform der Erfindung weisen die Silicium-haltigen Verbindungen C) allerdings mindestens eine mit Isocyanatgruppen reaktive funktionelle Gruppe auf. Dies erlaubt die in-situ Modifizierung der gegebenenfalls ebenfalls in der Zusammensetzung A) vorhandenen oligomeren Polyisocyanate B), wodurch oligomere Silicium-modifizierte Polyisocyanate D) erhalten werden. Als "mit Isocyanatgruppen reaktive funktionelle Gruppen können dabei insbesondere Hydroxygruppen, Thiolgruppen, Aminogruppen, Amidgruppen und Isocyanatgruppen dienen.

Als besonders praxisgerecht hat es sich erwiesen Silicium-haltige Verbindungen C) ausgewählt aus der Gruppe, bestehend aus Aminosilanen E), silanfunktionellen Asparaginsäureestern F), silanfunktionellen Alkylamiden G), Mercaptosilanen H), Isocyanato-Silanen I) und Mischungen davon, einzusetzen. Diese enthalten jeweils mindestens eine mit Isocyanatgruppen reaktive funktionelle Gruppe.

Geeignete Aminosilane E) sind beispielsweise 3-Aminopropyltrimethoxysilan, 3-Aminopropyltriethoxysilan, 3-Aminopropylmethyldimethoxysilan, 3-Aminopropylmethyldiethoxysilan, 3-Aminopropylethyldiethoxysilan, 3-Aminopropyldimethylethoxysilan, 3-Aminopropyldiisopropylethoxysilan, 3-Aminopropyltripropoxysilan, 3-Aminopropyltributoxysilan, 5 3-Aminopropylphenyldiethoxysilan, 3-Aminopropylphenyldimethoxysilan, 3-Aminopropyl-tris(methoxyethoxyethoxy)silan, 2-Aminoisopropyltrimethoxysilan, 4-Aminobutyltrimethoxysilan, 4-Aminobutyltriethoxysilan, 4-Aminobutylmethyldimethoxysilan, 4-Aminobutylmethyldiethoxysilan, 4-Aminobutylethyldimethoxysilan, 4-Aminobutylethyldiethoxysilan, 4-Aminobutyl-dimethylmethoxysilan, 4-Aminobutylphenyldimethoxysilan, 4-Aminobutylphenyldiethoxysilan, 4-Amino(3-methylbutyl)methyldimethoxysilan, 4-Amino(3-methylbutyl)-methyldiethoxysilan, 4- Amino(3-methylbutyl)trimethoxysilan, 3-Aminopropylphenylmethyl-n-propoxysilan, 3-Amino-propylmethyldibutoxysilan, 3-Aminopropyldiethylmethylsilan, 3-Aminopropylmethyl- bis(trimethylsiloxy)silan, 11-Aminoundecyltrimethoxysilan, N-Methyl-3-aminopropyltrimeth-oxysilan, N-Methyl-3-aminopropyltriethoxysilan, N-(n-Butyl)-3-aminopropyltrimethoxysilan, N-(n-Butyl)-3-aminopropyltriethoxysilan, N-(2-Aminoethyl)-3-aminopropyltrimethoxysilan, N-(2-Aminoethyl)-3-aminoisobutylmethyldimethoxysilan, N-(2-Aminoethyl)-3-aminopropyl- methyldimethoxysilan, N-(2-Aminoethyl)-3-aminopropyltris(2-ethylhexoxy)silan, N-(6-Amino-hexyl)-3-aminopropyltrimethoxysilan, N-Benzyl-N-(2-aminoethyl)-3-aminopropyltrimethoxysilan, Bis(3-trimethoxysilylpropyl)amin, Bis(3-triethoxysilylpropyl)amin, (Aminoethylaminomethyl)-phenethyltrimethoxysilan, N-Vinylbenzyl-N-(2-aminoethyl)-3-aminopropylpolysiloxan, N-Vinyl-benzyl-N(2-aminoethyl)-3-aminopro-pylpolysiloxan, 3-Ureidopropyltriethoxysilan, 3-(m-Aminophenoxy)-propyltrimethoxysilan, m- und/oder p-Aminophenyltrimetoxysilan, 3-(3-Amino-propoxy)-3,3-dimethyl-1-propenyltrimethoxysilan, 3-Aminopropylmethylbis(trimethylsiloxy)-silan, 3-Aminopropyl-tris(trimethyl-siloxy)-silan, 3-Aminopropylpentamethyldisiloxan oder beliebige Gemische solcher Aminosilane.

Ganz besonders bevorzugte Aminosilane E) sind N-Methyl-3-aminopropyltrimethoxysilan, N-Methyl-3-aminopropyltriethoxysilan, N-(n-Butyl)-3-amino-propyltrimethoxysilan, N-(n-Butyl)-3-aminopropyltriethoxysilan, Bis(3-trimethoxysilylpropyl)-amin und/oder Bis(3-triethoxysilylpropyl)amin.

Geeignete silanfunktionelle Asparaginsäureester F) lassen sich nach der Lehre der EP-A 0 596 360 durch Umsetzung von primären Aminogruppen tragenden Aminosilanen mit Fumarsäureestern und/oder Maleinsäureestern erhalten.

Besonders bevorzugte silanfunktionelle Asparaginsäureester F) sind Umsetzungsprodukte von 3-Aminopropyl-trimethoxysilan und/oder 3-Aminopropyltriethoxysilan mit Maleinsäurediethylester.

Erfindungsgemäß geeignete silanfunktionelle Alkylamide G), lassen sich beispielsweise nach den in US 4 788 310 und US 4 826 915 offenbarten Verfahren durch Umsetzung von primären Aminogruppen tragenden Aminosilanen mit Alkylcarbonsäurealkylestern unter Alkohoabspaltung erhalten.

Besonders bevorzugte silanfunktionelle Alkylamide G) sind Umsetzungsprodukte von 3-Aminopropyl-trimethoxysilan und/oder 3-Aminopropyltriethoxysilan mit Methylformiat und/oder Ethylformiat.

Erfindungsgemäß geeignete Mercaptosilane H) sind beispielsweise 2-Mercaptoethyltrimethylsilan, 2-Mercaptoethylmethyldimethoxysilan, 2-Mercaptoethyltrimethoxysilan, 2-Mercaptoethyltriethoxysilan, 3-Mercaptopropylmethyldimethoxysilan, 3-Mercaptopropyldimethylmethoxysilan, 3-Mercaptopropyltrimethoxysilan, 3-Mercaptopropylmethyldiethoxysilan, 3-Mercaptopropyltriethoxysilan, 3-Mercaptopropylethyldimethoxysilan, 3-Mercaptopropylethyldiethoxysilan und/oder 4-Mercaptobutyltrimethoxysilan.

Ganz besonders bevorzugte Mercaptosilane H) sind insbesondere 3-Mercaptopropyltrimethoxy-silan und/oder 3-Mercaptopropyltriethoxysilan.

Erfindungsgemäß geeignete Isocyanato-Silane I) sind beispielsweise 3-Isocyanatopropyltrimethoxysilan, 3-Isocyanatopropyltriethoxysilan, 3-Isocyanatopropyltriisopropoxysilan, 2-Isocyanatoethyltrimethoxysilan, 2-Isocyanatoethyltriethoxysilan, 2-Isocyanatoethyltriisopropoxysilan, 4-Isocyanatobutyltrimethoxysilan, 4-Isocyanatobutyltriethoxysilan, 4-Isocyanatobutyltriisopropoxysilan, Isocyanatomethyltrimethoxysilan, Isocyanatomethyltriethoxysilan, Isocyanatomethyltriisopropoxysilan oder die nach dem Verfahren der WO 2014/037279 erhältlichen monomerarmen Isocyanatosilane mit Thiourethanstruktur.

Bevorzugt werden als Isocyanato Silane I) 3-Isocyanatopropyltrimethoxysilan und/oder 3-Isocyanatopropyltriethoxysilan, eingesetzt.

Gemäß einer bevorzugten Ausführungsform der Erfindung weisen die Silicium-haltigen Verbindungen C) und die oligomeren, Silicium-modifizierten Polyisocyanate D) mindestens eine Struktureinheit gemäß Formel (V) 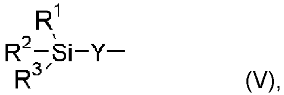
- wobei R¹, R² und R³: jeweils für Methyl, Methoxy und/oder Ethoxy stehen, mit der Maßgabe, dass mindestens einer der Reste R¹, R² und R³ für einen solchen Methoxy- oder Ethoxyrest steht;
und
- Y: für einen linearen oder verzweigten organischen Rest mit mindestens 1 Kohlenstoffatom steht.

Gemäß einer weiteren bevorzugten Ausführungsform der Erfindung weisen die Silicium-haltigen Verbindungen C) und die oligomeren, Silicium-modifizierten Polyisocyanate D) mindestens eine Struktureinheit auf, ausgewählt aus der Gruppe, bestehend aus
a) einer Struktureinheit der Formel (I) 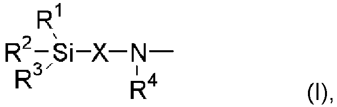 wobei
   - R¹, R² und R³: jeweils für Methyl, Methoxy und/oder Ethoxy, stehen, mit der Maßgabe, dass mindestens einer der Reste R¹, R² und R³ für einen solchen Methoxy- oder Ethoxyrest steht,
   - X: für einen Propylenrest (-CH₂-CH₂-CH₂-) steht, und
   - R⁴: für Wasserstoff, einen Methylrest oder einen Rest der Formel 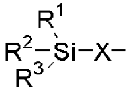 steht, in welchem R¹, R², R³ und X die vorstehend angegebene Bedeutung haben;
b) einer Struktureinheit der Formel (II) 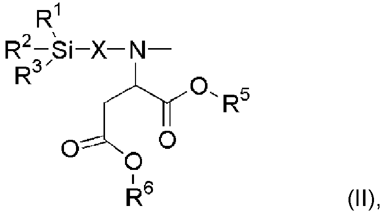 wobei
   - R¹, R², R³ und X: wobei R¹, R² und R³ die für Formel (I) genannte Bedeutung haben,
   - R⁵ und R⁶: für gleiche oder verschiedene Reste stehen und einen Methyl-, Ethyl-, n-Butyl-oder 2-Ethylhexylrest bedeuten;
c) einer Struktureinheit der Formel (III) 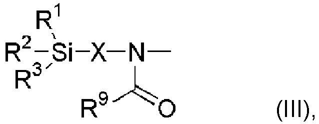 wobei
   - R¹, R², R³ und X: wobei R¹, R² und R³ die für Formel (I) genannte Bedeutung haben,
   - R⁹: für Wasserstoff steht;
   und
d) einer Struktureinheit der Formel (IV) 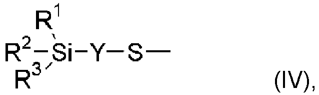 wobei
   - R¹, R² und R³: wobei R¹, R² und R³ die für Formel (I) genannte Bedeutung haben,
   - Y: für einen Propylenrest (-CH₂-CH₂-CH₂-) steht.

Die erfindungsgemäßen Polyisocyanurate sind durch katalytische Trimerisierung gemäß dem erfindungsgemäßen Verfahren erhältlich. "Katalytisch" bedeutet dabei in Gegenwart eines geeigneten Trimerisierungskatalysators L).

Zur Beschleunigung der Hydrolyse und Kondensation der Alkoxysilangruppen können neben den Trimerisierungskatalysatoren zusätzlich weitere Katalysatoren mitverwendet werden, sofern sie die Trimerisierungsreaktion nicht erheblich verlangsamen oder sogar unterbinden. Derartige Katalysatoren sind beispielsweise Basen, wie z. B. N-substituierte Amidine wie 1,5-Diazabicyclo[4.3.0]non-5-en (DBN) und 1,5-Diazabicyclo[5.4.0]undec-7-en (DBU), aber auch Metallsalze oder metallorganische Verbindungen, wie z. B. Tetraisopropyltitanat, Tetrabutyltitanat, Titan(IV)acetylacetonat, Aluminiumacetylacetonat, Aluminiumtriflat oder Zinntriflat.

Geeignete Trimerisierungskatalysatoren L) für das erfindungsgemäße Verfahren sind prinzipiell alle Verbindungen, die die Trimerisierung von Isocyanatgruppen zu Isocyanuratstrukturen beschleunigen. Vorzugsweise wird ein Trimerisierungskatalysator L) eingesetzt, der die Trimerisierungsreaktion unterhalb 25 °C, insbesondere unterhalb 30 °C, bevorzugt unterhalb 40 °C, nicht oder nicht wesentlich beschleunigt, sie oberhalb 60 °C, insbesondere oberhalb 70 °C aber signifikant beschleunigt. Nicht wesentlich beschleunigt bedeutet dabei, dass die Präsenz des Trimerisierungskatalysators L) in der Reaktionsmischung unterhalb 25 °C, insbesondere unterhalb 30 °C, bevorzugt unterhalb 40 °C, keinen wesentlichen Einfluss auf die Reaktionsgeschwindigkeit der ohnehin ablaufenden Reaktion hat. Unter einer signifikanten Beschleunigung wird verstanden, dass sich die Präsenz des thermolatenten Katalysators oberhalb 60 °C, insbesondere oberhalb 70 °C in Reaktionsmischung deutlich auf die Reaktionsgeschwindigkeit der ohnehin ablaufenden Reaktion auswirkt.

Da die Isocyanuratbildung in Abhängigkeit vom verwendeten Katalysator häufig von Nebenreaktionen, beispielsweise der Dimerisierung zu Uretdionstrukturen oder der Trimerisierung unter Bildung von Iminoxadiazindionen (sogenannten asymmetrischen Trimerisaten) und bei Vorhandensein von Urethangruppen im Ausgangspolyisocyanat von Allophanatisierungsreaktionen, begleitet wird, soll im Rahmen der vorliegenden Erfindung der Begriff "Trimerisierung" synonym auch für diese zusätzlich ablaufenden Reaktionen stehen.

Gemäß einer besonderen Ausführungsform bedeutet Trimerisierung jedoch, dass vorwiegend Cyclotrimerisierungen von mindestens 50%, vorzugsweise mindestens 60%, besonders bevorzugt mindestens 70%, insbesondere mindestens 80%, der in der Zusammensetzung A) vorliegenden Isocyanatgruppen, zu Isocyanurat Struktureinheiten katalysiert werden. Nebenreaktionen, insbesondere solche zu Uretdion-, Allophanat-, und/oder Iminooxadiazindionstrukturen treten jedoch üblicherweise auf und können sogar gezielt genutzt werden, um z.B. den Tg-Wert des erhaltenen Polyisocyanuratkunststoffs vorteilhaft zu beeinflussen.

Geeignete Katalysatoren L) für das erfindungsgemäße Verfahren sind beispielsweise einfache tertiäre Amine, wie z.B. Triethylamin, Tributylamin, N,N-Dimethylanilin, N-Ethylpiperidin oder N, N'-Dimethylpiperazin. Geeignete Katalysatoren sind auch die in der GB 2 221 465 beschriebenen tertiären Hydroxyalkylamine, wie z.B. Triethanolamin, N-Methyl-diethanolamin, Dimethylethanolamin, N-Isopropyldiethanolamin und 1-(2-Hydroxyethyl)pyrrolidin, oder die aus der GB 2 222 161 bekannten, aus Gemischen tertiärer bicyclischer Amine, wie z.B. DBU, mit einfachen niedermolekularen aliphatischen Alkoholen bestehenden Katalysatorsysteme.

Als Trimerisierungskatalysatoren L) für das erfindungsgemäße Verfahren ebenfalls geeignet sind eine Vielzahl unterschiedlicher Metallverbindungen. Geeignet sind beispielsweise die in der DE-A 3 240 613 als Katalysatoren beschriebenen Oktoate und Naphthenate von Mangan, Eisen, Cobalt, Nickel, Kupfer, Zink, Zirkonium, Cer oder Blei oder deren Gemische mit Acetaten von Lithium, Natrium, Kalium, Calcium oder Barium, die aus DE-A 3 219 608 bekannten Natrium- und Kalium-Salze von linearen oder verzweigten Alkancarbonsäuren mit bis zu 10 C-Atomen, wie z.B. von Propionsäure, Buttersäure, Valeriansäure, Capronsäure, Heptansäure, Caprylsäure, Pelargonsäure, Caprinsäure und Undecylsäure, die aus der EP-A 0 100 129 bekannten Alkali- oder Erdalkalimetallsalze von aliphatischen, cycloaliphatischen oder aromatischen Mono- und Polycarbonsäuren mit 2 bis 20 C-Atomen, wie z.B. Natrium- oder Kaliumbenzoat, die aus der GB-PS 1 391 066 und GB-PS 1 386 399 bekannten Alkaliphenolate, wie z.B. Natrium- oder Kaliumphenolat, die aus der GB 809 809 bekannten Alkali- und Erdalkalioxide, -hydroxide, -carbonate, -alkoholate und -phenolate, Alkalimetallsalze von enolisierbaren Verbindungen sowie Metallsalze schwacher aliphatischer bzw. cycloaliphatischer Carbonsäuren, wie z.B. Natriummethoxid, Natriumacetat, Kaliumacetat, Natriumacetoessigester, Blei-2-ethylhexanoat und Bleinaphthenat, die aus der EP-A 0 056 158 und EP-A 0 056 159 bekannten, mit Kronenethern oder Polyetheralkoholen komplexierten basischen Alkalimetallverbindungen, wie z.B. komplexierte Natrium- oder Kaliumcarboxylate, das aus der EP-A 0 033 581 bekannte Pyrrolidinon-Kaliumsalz, die aus der Anmeldung EP 13196508.9 bekannten ein- oder mehrkernigen Komplexverbindung von Titan, Zirkonium und/oder Hafnium, wie z.B. Zirkoniumtetra-n-butylat, Zirkoniumtetra-2-ethylhexanoat und Zirkoniumtetra-2-ethylhexylat, sowie Zinnverbindungen der in European Polymer Journal, Vol. 16, 147 - 148 (1979*)* beschriebenen Art, wie z.B. Dibutylzinndichlorid, Diphenylzinndichlorid, Triphenylstannanol, Tributylzinnacetat, Tributylzinnoxid, Zinnoctoat, Dibutyl(dimethoxy)stannan und Tributylzinnimidazolat.

Weitere für das erfindungsgemäße Verfahren geeignete Trimerisierungskatalysatoren L) sind beispielsweise die aus der DE-A 1 667 309, EP-A 0 013 880 und EP-A 0 047 452 bekannten quaternären Ammoniumhydroxyde, wie z.B. Tetraethylammoniumhydroxid, Trimethylbenzylammoniumhydroxid, N,N-Dimethyl-N-dodecyl-N-(2-hydroxyäthyl)ammoniumhydroxid, N-(2-Hydroxyäthyl)-N,N-dimethylN-(2,2'-dihydroxymethylbutyl)-ammoniumhydroxid und 1-(2-Hydroxyethyl)-1,4-diazabicyclo-[2.2.2]-octanhydroxid (Monoaddukt von Äthylenoxid und Wasser an 1,4-Diazabicyclo-[2.2.2]-octan), die aus EP-A 37 65 oder EP-A 10 589 bekannten quaternären Hydroxyalkylammoniumhydroxide, wie z.B. N,N,N-Trimethyl-N-(2-hydroxyäthyl)-ammonium-hydroxid, die aus DE-A 2631733, EP-A 0 671 426, EP-A 1 599 526 und US 4,789,705 bekannten Trialkylhydroxylalkylammoniumcarboxylate, wie z.B. N,N,N-Trimethyl-N-2-hydroxypropylammonium-p-tert.-butylbenzoat und N,N,N-Trimethyl-N-2-hydroxypropylammonium-2-ethylhexanoat, die aus der EP-A 1 229 016 bekannten quartären Benzylammoniumcarboxylate, wie z.B. N-Benzyl-N,N-dimethyl-N-ethylammoniumpivalat, N-Benzyl-N,N-dimethyl-N-ethylammonium-2-ethylhexanoat, N-Benzyl-N, N, N-tributylammonium-2-ethylhexanoat, N,N-Dimethyl-N-ethyl-N-(4-methoxybenzyl)ammonium-2-ethylhexanoat oder N,N,N-Tributyl-N-(4-methoxybenzyl)ammonium-pivalat, die aus der WO 2005/087828 bekannten tetrasubstituierten Ammonium-α-hydroxycarboxylate, wie z.B. Tetramethylammonium-lactat, die aus der EP-A 0 339 396, EP-A 0 379 914 und EP-A 0 443 167 bekannten quartären Ammonium- oder Phosphoniumfluoride, wie z.B. N-Methyl-N,N,N-trialkylammoniumfluoride mit C₈-C₁₀-Alkylresten, N,N,N,N-Tetra-n-butylammoniumfluorid, N,N,N-Trimethyl-N-benzylammonium-fluorid, Tetramethylphosphoniumfluorid, Tetraethylphosphoniumfluorid oder Tetra-n-butylphosphoniumfluorid, die aus der EP-A 0 798 299, EP-A 0 896 009 und EP-A 0 962 455 bekannten quaternären Ammonium- und Phosphoniumpolyfluoride, wie z.B. Benzyltrimethylammoniumhydrogenpolyfluorid, die aus der EP-A 0 668 271 bekannten Tetraalkylammoniumalkylcarbonate, die durch Umsetzung tertiärer Amine mit Dialkylcarbonaten erhältlich sind, oder betainstrukturierte Quartär-Ammonioalkylcarbonate, die aus der WO 1999/023128 bekannten quaternären Ammoniumhydrogencarbonate, wie z.B. Cholin-bicarbonat, die aus der EP 0 102 482 bekannten, aus tertiären Aminen und alkylierend wirkenden Estern von Säuren des Phosphors erhältlichen quartären Ammoniumsalze, wie z.B. Umsetzungsprodukte von Triethylamin, DABCO oder N-Methylmorpholin mit Methanphosphonsäuredimethylester, oder die aus WO 2013/167404 bekannten tetrasubstituierten Ammoniumsalze von Lactamen, wie z.B. Trioctylammoniumcaprolactamat oder Dodecyltrimethylammoniumcaprolactamat.

Weitere für das erfindungsgemäße Verfahren geeignete Trimerisierungskatalysatoren L) finden sich beispielsweise in J. H. Saunders und K. C. Frisch, Polyurethanes Chemistry and Technology, S. 94 ff (1962) und der dort zitierten Literatur.

Die Katalysatoren L) können sowohl einzeln als auch in Form beliebiger Gemische untereinander im erfindungsgemäßen Verfahren eingesetzt werden.

Bevorzugte Katalysatoren L) sind Metallverbindungen der vorstehend genannten Art, insbesondere Carboxylate und Alkoholate von Alkalimetallen, Erdalkalimetallen oder Zirkonium sowie organische Zinnverbindungen der genannten Art.

Besonders bevorzugte Trimerisierungskatalysatoren L) sind Natrium- und Kaliumsalze aliphatischer Carbonsäuren mit 2 bis 20 C-Atomen sowie aliphatisch substituierte Zinnverbindungen.

Ganz besonders bevorzugte Trimerisierungskatalysatoren L) für das erfindungsgemäße Verfahren sind Kaliumacetat, Zinnoctoat und/oder Tributylzinnoxid.

Gemäß einer Ausführungsform der Erfindung findet die katalytische Trimerisierung in Gegenwart eines Trimerisierungskatalysators L) statt, wobei der Trimerisierungskatalysator L) vorzugsweise mindestens ein Alkalimetall- oder Erdalkalimetallsalz umfasst.

Gemäß einer bevorzugten Ausführungsform der Erfindung umfasst der Trimerisierungskatalysator L) als Alkalimetallsalz Kaliumacetat und/oder einen Polyether, insbesondere ein Polyethylenglykol.

Beim erfindungsgemäßen Verfahren kommt der Trimerisierungskatalysator L) im Allgemeinen in einer auf die Menge der eingesetzten Zusammensetzung A) bezogenen Konzentration von 0,0005 bis 5,0 Gew.-%, bevorzugt von 0,10 bis 2,0 Gew.-% und besonders bevorzugt von 0,25 bis 1,0 Gew.-% zum Einsatz.

Die beim erfindungsgemäßen Verfahren zum Einsatz gelangenden Trimerisierungskatalysatoren L) sind in den Mengen, die zur Initiierung der Oligomerisierungsreaktion benötigt werden, in der Regel ausreichend in der Zusammensetzung A) löslich. Die Zugabe des Katalysators L) zur Zusammensetzung A) erfolgt daher vorzugsweise in Substanz.

Gegebenenfalls können die Katalysatoren L) zur Verbesserung ihrer Einarbeitbarkeit jedoch auch in einem geeigneten organischen Lösungsmittel gelöst eingesetzt werden. Der Verdünnungsgrad der Katalysatorlösungen kann dabei innerhalb eines sehr breiten Bereichs frei gewählt werden. Katalytisch wirksam sind solche Katalysatorlösungen üblicherweise ab einer Konzentration von etwa 0,01 Gew.-% bezogen auf das Gesamtgewicht des Katalysators und des organischen Lösungsmittels.

Geeignete Katalysatorlösungsmittel sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3- Methoxy-n-butylacetat, Propylenglykoldiacetat, Aceton, Methylethylketon, Methylisobutylketon, Cyclohexanon, Lactone, wie β-Propiolacton, γ-Butyrolacton, ε-Caprolacton und ε-Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Sofern beim erfindungsgemäßen Verfahren Katalysatorlösungsmittel zum Einsatz kommen, werden bevorzugt Katalysatorlösungsmittel, die gegenüber Isocyanaten reaktive Gruppen tragen und in den Polyisocyanuratkunststoff eingebaut werden können, verwendet. Beispiele für solche Lösungsmittel sind ein- oder mehrwertige einfache Alkohole, wie z.B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z.B. 1-Methoxy-2-propanol, 3-Ethyl-3-hydroxymethyloxetan, Tetrahydrofurfurylalkohol, Ethylenglykol-monomethylether, Ethylenglykolmonoethylether, Ethylenglykolmonobutylether, Diethylen-glykolmonomethylether, Diethylenglykolmonoethylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z.B. Ethylenglykolmonoacetat, Propylenglykolmonolaurat, Glycerinmono- und diacetat, Glycerinmonobutyrat oder 2,2,4-Trimethyl-1,3-pentandiol-monoisobutyrat; ungesättigte Alkohole wie z.B. Allylalkohol, 1,1-Dimethylallylalkohol oder Oleinalkohol; araliphatische Alkohole wie z.B. Benzylalkohol; N-monosubstituierte Amide, wie z.B. N-Methylformamid, N-Methylacetamid, Cyanacetamid oder 2-Pyrrolidinon oder beliebige Gemische derartiger Lösungsmittel.

Die nach dem erfindungsgemäßen Verfahren erhältlichen Polyisocyanuratkunststoffe zeichnen sich bereits als solche, d. h. ohne Zusatz entsprechender Hilfs-und Zusatzmittel M), durch eine sehr gute Lichtbeständigkeit aus. Dennoch können bei ihrer Herstellung gegebenenfalls übliche Hilfs- und Zusatzmittel M), wie beispielsweise übliche Füllstoffe, UV-Stabilisatoren, Antioxidantien, Formtrennmittel, Wasserfänger, Slipadditive, Entschäumer, Verlaufsmittel, Rheologieadditive, Flammschutzmittel und/oder Pigmente, mitverwendet werden. Diese Hilfs- und Zusatzmittel M), ausgenommen Füllstoffe und Flammschutzmittel, liegen üblicherweise in einer Menge von weniger als 10 Gew.-%, vorzugsweise weniger als 5 Gew.-%, besonders bevorzugt bis zu 3 Gew.-%, bezogen auf die Zusammensetzung A), im Polyisocyanuratkunststoff vor. Flammschutzmittel liegen üblicherweise in Mengen von höchstens 70 Gew.-%, vorzugsweise höchstens 50 Gew.-%, besonders bevorzugt höchstens 30 Gew.-%, berechnet als Gesamtmenge an eingesetzten Flammschutzmitteln bezogen auf das Gesamtgewicht der Zusammensetzung A), im Polyisocyanuratkunststoff vor.

Geeignete Füllstoffe M_{w}) sind beispielsweise AlOH₃, CaCOs, Metallpigmente wie TiO₂ und weitere bekannte übliche Füllstoffe. Diese Füllstoffe M_{w}) werden vorzugsweise in Mengen von höchstens 70 Gew.-%, bevorzugt höchstens 50 Gew.-%, besonders bevorzugt höchstens 30 Gew.-%, berechnet als Gesamtmenge an eingesetzten Füllstoffen bezogen auf das Gesamtgewicht der Zusammensetzung A), eingesetzt.

Geeignete UV-Stabilisatoren Mₓ) können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5-(1,1-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1-methyl-1-phenylethyl)phenol, 2-(5-Chlor-2H-benzotriazol-2-yl)-4,6-bis(1,1-dimethylethyl)phenol; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie z.B. α-Cyano-β-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z.B. 4-Methoxybenzylidenmalonsäuredimethylester, 4-Methoxybenzylidenmalonsäurediethylester, 4-Butoxy-benzylidenmalonsäuredimethylester. Diese bevorzugten Lichtstabilisatoren können sowohl einzeln als auch in beliebigen Kombinationen untereinander zum Einsatz kommen.

Besonders bevorzugte UV-Stabilisatoren Mₓ) für die erfindungsgemäß herstellbaren Polyisocyanuratkunststoffe sind solche, die Strahlung einer Wellenlänge < 400 nm vollständig absorbieren. Hierzu zählen beispielsweise die genannten Benztriazolderivate. Ganz besonders bevorzugte UV-Stabilisatoren sind 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol und/oder 2-(5-Chlor-2H-benzotriazol-2-yl)-4,6-bis(1,1-dimethylethyl)phenol.

Gegebenenfalls werden ein oder mehrere der beispielhaft genannten UV-Stabilisatoren Mₓ) der Zusammensetzung A) vorzugsweise in Mengen von 0,001 bis 3,0 Gew.-%, besonders bevorzugt 0,01 bis 2 Gew.-%, berechnet als Gesamtmenge an eingesetzten UV-Stabilisatoren bezogen auf das Gesamtgewicht der Zusammensetzung A) zugesetzt.

Geeignete Antioxidantien M_{y}) sind vorzugsweise sterisch gehinderten Phenole, welche vorzugsweise ausgewählt werden können aus der Gruppe, bestehend aus 2,6-Di-tert-butyl-4-methylphenol (lonol), Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat]. Diese können bei Bedarf sowohl einzeln als auch in beliebigen Kombinationen untereinander eingesetzt werden.

Diese Antioxidantien M_{y}) werden vorzugsweise in Mengen von 0,01 bis 3,0 Gew.-%, besonders bevorzugt 0,02 bis 2,0 Gew.-%, berechnet als Gesamtmenge an eingesetzten Antioxidantien bezogen auf das Gesamtgewicht der Zusammensetzung A) eingesetzt.

Das erfindungsgemäße Verfahren kann, abgesehen von den geringen Mengen gegebenenfalls mitzuverwendender Katalysatorlösungsmittel, lösungsmittelfrei durchgeführt werden. Insbesondere bei der erfindungsgemäßen Verwendung zur Herstellung von Beschichtungen oder Folien kann die Polyisocyanatkomponente zur Verringerung der Verarbeitungsviskosität gegebenenfalls aber auch mit organischen Lösungsmitteln verdünnt werden. Hierfür geeignete Lösungsmittel sind beispielsweise die bereits vorstehend beschriebenen, gegenüber Isocyanatgruppen inerten Katalysatorlösungsmittel.

Bei der erfindungsgemäßen Verwendung zur Herstellung von Folien, Halbzeugen oder Formteilen können als weitere Hilfs- und Zusatzmittel M) schließlich auch interne Formtrennmittel M_{z}) zugesetzt werden.

Bei diesen handelt es sich vorzugsweise um die als Formtrennmittel bekannten Perfluoralkyl- oder Polysiloxaneinheiten enthaltenden nichtionischen Tenside, quartäre Alkylammoniumsalze, wie z.B. Trimethylethylammoniumchlorid, Trimethylstearylammoniumchlorid, Dimethylethylcetylammoniumchlorid, Triethyldodecylammoniumchlorid, Trioctylmethylammoniumchlorid und Diethylcyclohexyldodecylammoniumchlorid, saure Mono- und Dialkylphosphate mit 2 bis 18 Kohlenstoffatomen im Alkylrest, wie z.B. Ethylphosphat, Diethylphosphat, Isopropylphosphat, Diisopropylphosphat, Butylphosphat, Dibutylphosphat, Octylphosphat, Dioctylphosphat, Isodecylphosphat, Diisodecylphosphat, Dodecylphosphat, Didodecylphosphat, Tridecanolphosphat, Bis(tridecanol)-phosphat, Stearylphosphat, Distearylphosphat und beliebige Gemische solcher Formtrennmittel. Besonders bevorzugte Formtrennmittel M_{z}) sind die genannten sauren Mono- und Dialkylphosphate, ganz besonders bevorzugt solche mit 8 bis 12 Kohlenstoffatomen im Alkylrest.

Interne Formtrennmittel M_{z}) werden beim erfindungsgemäßen Verfahren gegebenenfalls vorzugsweise in Mengen von 0,01 bis 3,0 Gew.-%, besonders bevorzugt 0,02 bis 2,0 Gew.-%, berechnet als Gesamtmenge an eingesetztem internem Formtrennmittel bezogen auf das Gesamtgewicht der Zusammensetzung A) eingesetzt.

Gemäß einer Ausführungsform des erfindungsgemäßen Verfahrens wird der beschriebenen Zusammensetzung A), gegebenenfalls unter Inertgas, wie z.B. Stickstoff, und gegebenenfalls unter Mitverwendung der vorstehend genannten Lösungsmittel sowie Hilfs-und Zusatzmittel M), ein Trimerisierungskatalysator L) oder ein Gemisch unterschiedlicher Trimerisierungskatalysatoren L) zugesetzt und mit Hilfe eines geeigneten Mischaggregats homogen eingemischt. Die Zugabe von Katalysator L) und dem gegebenenfalls mitzuverwendenden Lösungsmittel sowie Hilfs- und Zusatzmitteln M) kann dabei in beliebiger Reihenfolge nacheinander oder im Gemisch in den oben angegebenen Mengen in der Regel bei einer Temperatur von 0 bis 100°C, vorzugsweise von 15 bis 80°C, besonders bevorzugt von 20 bis 60°C, stattfinden.

Der hier beschriebene erfindungsgemäße Polyisocyanuratkunststoff enthaltend Siloxangruppen eignet sich zur Herstellung von Beschichtungen, Folien, Halbzeugen und Formteilen. Dabei kann je nach Verwendungszweck die Applikation der Reaktionsmischung nach unterschiedlichen an sich bekannten Methoden erfolgen.

Zur Herstellung von Folien oder Beschichtungen, wie z.B. Lacken, kann eine Reaktionsmischung, umfassend Katalysator L) und Zusammensetzung A), beispielsweise durch Spritzen, Streichen, Tauchen, Fluten, Drucken oder mit Hilfe von Pinseln, Walzen oder Rakeln in einer oder mehrerer Schichten auf beliebige Substrate, wie z.B. Metall, Holz, Glas, Stein, keramische Materialien, Beton, harte und flexible Kunststoffe, Textilien, Leder und Papier, aufgebracht werden, die vor der Beschichtung gegebenenfalls auch mit üblichen Grundierungen versehen werden können.

Weiterer Gegenstand der Erfindung ist ein Substrat, das mit einer Beschichtung enthaltend den erfindungsgemäßen Polyisocyanuratkunststoff enthaltend Siloxangruppen beschichtet ist, wobei das Substrat insbesondere ausgewählt sein kann aus einer Fahrzeugkarosserie, insbesondere einer Lastkraft- oder Kraftfahrzeugkarosserie, und Unterhaltungselektronikgegenständen, wie Laptops, Tablets oder Mobiltelefonen. Das Beschichten des Substrats mit der den erfindungsgemäßen Polyisocyanuratkunststoff enthaltenden Beschichtung kann mit den oben genannten an sich bekannten Methoden erfolgen. Hierbei kann entweder eine Reaktionsmischung, umfassend Katalysator L) und Zusammensetzung A), auf das Substrat aufgebracht werden oder es kann ein getrenntes Aufbringen des Katalysators L) und der Zusammensetzung A) auf das Substrat erfolgen. Die katalytische Trimerisierung der Zusammensetzung A) kann im erstgenannten Fall entweder bereits vor Aufbringen auf das Substrat durch Erwärmen der Reaktionsmischung bei Temperaturen, wie weiter unten definiert, gestartet werden oder durch Erwärmen beispielsweise des Substrats nach Aufbringen der Reaktionsmischung bei Temperaturen, wie weiter unten definiert. Die Reaktionsmischung kann auch auf ein bereits vor dem Aufbringen bei Temperaturen, wie weiter unten definiert, erwärmtes Substrat aufgebracht werden.

Zur Herstellung massiver Körper, wie z.B. Halbzeuge oder Formteile, kann die Mischung aus Katalysator L) und Zusammensetzung A) beispielsweise durch einfaches Vergießen von Hand, oder mit Hilfe geeigneter Maschinen, wie z.B. den in der Polyurethantechnologie üblichen Niederdruck- oder Hochdruckmaschinen in offene oder geschlossene Formen gefüllt werden.

Anschließend kann die Trimerisierungsreaktion durch Erwärmen, z.B. der beschichteten Substrate bzw. befüllten Formen, gestartet werden, wobei die optimale Reaktionstemperatur in Abhängigkeit vom jeweils gewählten Trimerisierungskatalysator L) von 45 bis 200°C, besonders bevorzugt von 60 bis 150°C, ganz besonders bevorzugt von 80 bis 140°C beträgt. Die Reaktionstemperatur kann während des gesamten Aushärteprozesses zum Polyisocyanurat im genannten Bereich konstant gehalten werden oder aber beispielsweise über mehrere Stunden linear oder stufenweise bis auf eine Temperatur größer 80°C, vorzugsweise größer 100°C, beispielsweise bis auf 130°C aufgeheizt werden. Wenn hier von "Reaktionstemperatur" die Rede ist, so ist damit die Umgebungstemperatur gemeint.

Abhängig vom gewählten Katalysator L) und der gewählten Reaktionstemperatur ist die Trimerisierungsreaktion nach einem Zeitraum von kleiner einer Minute bis zu mehreren Stunden oder erst nach einigen Tagen weitestgehend abgeschlossen, wie unten definiert. Der Verlauf der Reaktion kann anfangs noch durch titrimetrische Bestimmung des NCO-Gehaltes verfolgt werden, bei fortschreitender Umsetzung setzt aber rasch eine Gelierung und Verfestigung des Reaktionsgemisches ein, was nasschemische Analyseverfahren unmöglich macht. Der weitere Umsatz der Isocyanatgruppen kann dann nur noch durch spektroskopische Methoden, beispielsweise durch IR-Spektroskopie anhand der Intensität der Isocyanatbande bei ca. 2270 cm⁻¹, verfolgt werden.

Bei den erfindungsgemäßen Polyisocyanuratkunststoffen enthaltend Siloxangruppen handelt es sich vorzugsweise um hochumgesetzte Siloxangruppen enthaltende Polyisocyanurate, d.h. solche bei denen die Trimerisierungsreaktion zu Polyisocyanuratstrukturen weitestgehend abgeschlossen ist. Als "weitestgehend abgeschlossen" kann im Sinne der vorliegenden Erfindung eine Trimerisierungsreaktion zu Polyisocyanuratstrukturen angesehen werden, wenn mindestens 80 %, vorzugsweise mindestens 90 %, besonders bevorzugt mindestens 95 % der ursprünglich in der Zusammensetzung A) vorhandenen freien Isocyanatgruppen abreagiert haben. Anders ausgedrückt sind in dem erfindungsgemäßen Siloxangruppen enthaltenden Polyisocyanuratkunststoff nur noch höchstens 20 %, vorzugsweise höchstens 10 %, besonders bevorzugt höchstens 5 % der ursprünglich in der Zusammensetzung A) enthaltenen Isocyanatgruppen vorhanden. Dies kann dadurch erreicht werden, dass im erfindungsgemäßen Verfahren die katalytische Trimerisierung mindestens bis zu einem Umsetzungsgrad fortgesetzt wird, bei dem nur noch z.B. höchstens 20 % der ursprünglich in der Zusammensetzung A) enthaltenen Isocyanatgruppen vorhanden sind, so dass ein hochumgesetztes Polyisocyanurat erhalten wird. Der Prozentsatz an noch vorhandenen Isocyanat-Gruppen kann durch einen Vergleich des Gehalts an Isocyanat-Gruppen in Gew.-% in der ursprünglichen Zusammensetzung A) mit dem Gehalt an Isocyanat-Gruppen in Gew.-% im Reaktionsprodukt, beispielsweise durch vorgenannten Vergleich der Intensität der Isocyanatbande bei ca. 2270 cm⁻¹ mittels IR-Spektroskopie, bestimmt werden.

Bei den erfindungsgemäßen Polyisocyanuratkunststoffen enthaltend Siloxangruppen beträgt der Gehalt an Silicium (berechnet aus dem gravimetrisch nach oxidativem Aufschluß bestimmten Wert für Siliciumdioxid) bezogen auf den Polyisocyanuratkunststoff von 0,2 bis 45%, bevorzugt 1,0 bis 25%, insbesondere von 4 bis 15%.

Besonders praxisgerechte Ergebnisse lassen sich erzielen, wenn es sich bei dem Polyisocyanuratkunststoff enthaltend Siloxangruppen um einen solchen handelt, der Alkoxy-Siloxangruppen umfasst. Ein solcher Alkoxy-Siloxangruppen enthaltender Polyisocyanuratkunststoff ist erhältlich durch das erfindungsgemäße Verfahren, wobei es sich bei den Silicium-haltigen Verbindungen C) um Alkoxysilylgruppenhaltige Verbindungen C) handelt und es sich bei den oligomeren Silicium-modifizierten Polyisocyanaten D) um oligomere mit Alkoxysilylgruppen modifizierte Polyisocyanate D) handelt.

Das erfindungsgemäße Verfahren liefert transparente, vergilbungsstabile Siloxangruppen enthaltende Polyisocyanuratkunststoffe, die je nach Art des eingesetzten Ausgangspolyisocyanates neben Isocyanuratstrukturen und Siloxangruppen gegebenenfalls weitere oligomere Strukturen, wie Uretdion-, Allophanat-, Biuret-, Iminooxadiazindion- und/oder Oxadiazintrionstrukturen, enthalten und sich durch hervorragende Wärmebeständigkeiten auszeichnen.

Das erfindungsgemäße Verfahren ermöglicht es auf einfache Weise, durch geeignete Auswahl von oligomeren Polyisocyanaten B) und Silicium-haltigen Verbindungen C) und/oder oligomeren, Silicium-modifizierten Polyisocyanaten D) hochumgesetzte Siloxangruppenhaltige Polyisocyanuratkunststoffe unterschiedlicher Eigenschaften, beispielsweise unterschiedlicher Härtegrade, mechanischer Eigenschaften oder Glasübergangstemperaturen, zu synthetisieren.

Im Gegensatz zu Siloxangruppenhaltigen Polyurethankunststoffen, die durch Urethanisierung der Isocyanatgruppen und Hydrolyse bzw. Kondensation der Silicium-haltigen funktionellen Gruppen hergestellt wurden, zeichnen sich die erfindungsgemäßen Siloxangruppen enthaltenden Polyisocyanurate, durch eine erheblich höhere Vernetzungsdichte aus, weshalb sie sich insbesondere zur Fertigung von Beschichtungen mit hoher Kratz- und Chemikalienbeständigkeit Präzision eignen. Die vergleichsweise geringe freiwerdende Reaktionswärme gestattet dabei auch die problemlose Herstellung massiver großvolumiger Formteile.

Die Erfindung wird im Folgenden an Hand von Beispielen näher erläutert.

### Beispiele

### 1. Methoden:

Alle Prozentangaben beziehen sich, soweit nichts anderes angegeben wird, auf das Gewicht.

Die Bestimmung der NCO-Gehalte erfolgte titrimetrisch nach DIN EN ISO 11909.

OH-Zahlen wurden titrimetrisch nach DIN 53240-2: 2007-11, Säure-Zahlen nach DIN 3682 5 bestimmt. Die angegebenen OH-Gehalte wurden aus den analytisch ermittelten OH-Zahlen errechnet.

Die Rest-Monomeren Gehalte wurden nach DIN EN ISO 10283 gaschromatographisch mit internem Standard gemessen.

Sämtliche Viskositätsmessungen erfolgten mit einem Physica MCR 51 Rheometer der Fa. Anton Paar Germany GmbH (DE) nach DIN EN ISO 3219/A3.

Pendeldämpfung: Die Messung der Pendeldämpfung erfolgt nach DIN EN ISO 1522 auf einer Glasplatte und wird nach König bestimmt.

Lösemittelbeständigkeit: Dazu wurde eine kleine Menge der entsprechenden Lösemittel (Xylol, 1-Methoxypropylacetat-2, Ethylacetat oder Aceton) in ein Reagenzglas gegeben und mit einem Wattebausch an der Öffnung versehen, so dass eine mit Lösemittel gesättigte Atmosphäre innerhalb des Reagenzglases entstand. Die Reagenzgläser wurden anschließend mit dem Wattebausch auf die Lackoberfläche gebracht und verblieben dort für 5 Min. Nach Abwischen des Lösemittels wurde der Film auf Zerstörung/Erweichung/Haftverlust geprüft. (0= keine Veränderung, 5= Film zerstört)

### Hammertest mit Stahlwolle (Trockenverkratzung):

Ein Hammer (Gewicht: 800 g ohne Stiel), der an seiner flachen Seite mit Stahlwolle 00 bespannt war, wurde vorsichtig im rechten Winkel auf die beschichtete Oberfläche aufgesetzt und ohne zu verkanten und ohne zusätzliche Körperkraft in einer Spur über die Beschichtung geführt. Es wurden jeweils 50 Doppelhübe durchgeführt. Nach der Belastung mit dem Verkratzungsmedium wurde die Prüffläche mit einem weichen Tuch gereinigt und anschließend der Haze im Vergleich zum Wert vor der Verkratzung gemäß ASTM D1003 mit einem Haze Gard Plus der Firma BYK-Gardner bestimmt.

### 2. Materialien:

### Beispiel 1.

### Herstellung eines Polyisocyanats mit Alkoxysilylgruppen:

In einem Kolben mit Thermometer, KPG-Rührer, Rückflusskühler und Tropftrichter wurden unter Stickstoffatmosphäre wurden 536,2 g Desmodur^{®} N 3900 [Covestro AG, D, monomerarmes Poly-isocyanuratpolyisocyanat auf Basis von Hexamethylendiisocyanat (HDI), NCO-Gehalt: 23,5 %; Viskosität (23°C): 750 mPas, Gehalt an monomeren HDI ≤ 0,25 %] und 91 mg Zinktrifluormethansulfonat vorgelegt und auf 100 °C aufgewärmt. Bei dieser Temperatur wurden innerhalb von 1 h 373,1 g N-(3-Trimethoxysilylpropyl)formamid (1,8 mol, Herstellung gemäß Beispiel 1 der WO 2015/113919 A1) zugetropft. Man rührte bei 100 °C weitere 3 h nach, bis der Gehalt freier NCO-Gruppen auf 4,8 % abgefallen war. Der Ansatz wurde mit 114 g Butylacetat und 114 g Solventnaphta 100 versetzt und auf Raumtemperatur abgekühlt.

Man erhielt eine klare Flüssigkeit.

| | |
|---|---|
| NCO-Gehalt | 4,4 % |
| Si-Gehalt: | 4,4 % |
| Festkörpergehalt | 80 % |

Viskosität (23°C, Schergefälle D = 250 1/s) 1030 mPas.

### Beispiel 2.

### Herstellung eines Polyisocyanats mit Alkoxysilylgruppen

In Anlehnung an ein Ausführungsbeispiel der WO 2012/168079 (Härtersystem VB2-1) wurden durch Umsetzung von 100 Gew.-Teilen Desmodur N 3300 (monomerarmes Poly-isocyanuratpolyisocyanat auf Basis von HDI, NCO-Gehalt: 21,6 %; mittlere NCO-Funktionalität: 3,5; Viskosität (23°C): 3200 mPas, Gehalt an monomeren HDI ≤ 0,25 %) mit einer Mischung aus 30 Gew.-Teilen Bis-[3-(trimethoxysilyl)-propyl]-amin und 21 Gew.-Teilen N-[3-(Trimethoxysilyl)-propyl]-butylamin in 84 Gew.-Teilen Butylacetat bei 50°C ein teilsilanisiertes HDI-Trimerisat hergestellt. Nach einer Reaktionszeit von ca. 4 h wurden für die vorliegende Lösung folgende Kenndaten gefunden:

| | |
|---|---|
| NCO-Gehalt: | 6,0 % |
| Si-Gehalt: | 3,2 % |
| Festkörpergehalt: | 64 % |
| Viskosität (23°C, Schergefälle D = 100 1/s): | 70 mPas |

### Beispiel 3.

### Abmischung eines Alkoxysilyl-funktionellen Diurethans mit einem Polyisocyanat

100 g VESTANAT^{®} EP-M 95 [Evonik Industries, D; lösemittelfreier, Trimethoxysilylgruppen enthaltener Vernetzer, nach der Lehre der WO 2014/180623 (Tabelle 1) hergestellt durch Umsetzung von 2 mol 3-Isocyanatopropyltrimethoxysilan mit 1 mol 1,9-Nonandiol] wurden mit 200 g Desmodur^{®} N 3600 [Covestro AG, D, monomerarmes Polyisocyanuratpolyisocyanat auf Basis von Hexamethylendiisocyanat (HDI), NCO-Gehalt: 23,0 %; Viskosität (23°C): 1200 mPas, Gehalt an monomeren HDI □ 0,25 %] unter Ausschluss von Feuchtigkeit bei Raumtemperatur gemischt.

| | |
|---|---|
| NCO-Gehalt: | 15,3 % |
| Si-Gehalt: | 3,3 % |
| Festkörpergehalt: | 100 % |
| Viskosität (23°C, D= 100 1/s): | 1300 mPas |

### Beispiel 4.

### Herstellung eines Polyisocyanats mit Alkoxysilylgruppen

756 g (4,5 mol) Hexamethylendiisocyanat (HDI) wurden bei einer Temperatur von 80°C unter trockenem Stickstoff und Rühren vorgelegt und mit 0,1 g Zink-(II)-2-ethyl-1-hexanoat als Katalysator versetzt. Über einen Zeitraum von ca. 30 min wurden 294 g (1,5 mol) Mercapto-propyltrimethoxysilan zugetropft, wobei die Temperatur der Mischung aufgrund der exotherm einsetzenden Reaktion bis auf 85°C anstieg. Das Reaktionsgemisch wurde weiter bei 85°C gerührt, bis der NCO-Gehalt nach ca. 2 h auf 34,9 % abgesunken war. Der Katalysator wurde durch Zugabe von 0,1 g ortho-Phosphorsäure deaktiviert und das nicht umgesetzte monomere HDI bei einer Temperatur von 130°C und einem Druck von 0,1 mbar im Dünnschichtverdampfer abgetrennt. Man erhielt 693 g eines praktisch farblosen klaren Polyisocyanatgemisches, das folgende Kenndaten und Zusammensetzung aufwies:
NCO-Gehalt: 11,8 %
Si-Gehalt: 6,1 %
monomeres HDI: 0,06 %
Viskosität (23°C, Schergefälle D = 100 1/s): 452 mPas
Thiourethan: 0,0 mol-%
Thioallophanat: 99,0 mol-%
Isocyanuratgruppen: 1,0 mol-%

### Katalysatoren

### Kat. 1 : Herstellung einer Katalytischen KALIUMACETAT 18-Krone-6 Lösung in DIETHYLENGLYKOL:

1,77 g Kaliumacetat (Firma Sigma Aldrich), 4,75 g Kronenether 18-Krone-6 der Firma Merck KGaA und 31,15 g Diethylenglykol der Firma Sigma Aldrich wurden eingewogen und mehrere Stunden gerührt, bis sich eine klare Lösung gebildet hat.

### Kat. 2: TETRABUTYLAMMONIUMBENZOAT (TBAB)

TBAB (Tetrabutylammoniumbenzoat der Firma Sigma Aldrich) wurde 10%ig in MPA ( 1-Methoxy-2-propylacetat; Propylenglykol-monomethylether-1-acetat-2) gelöst eingesetzt.

### Anwendungsbeispiel:

Die Herstellung der Beschichtungsmittel erfolgte indem die Polyisocyanate mit Alkoxysilylgruppen bzw. die Abmischung nach Beispiel 3 vorgelegt wurden und anschließend die jeweiligen Kataysator-Lösungen zugegeben wurden. Gerührt wurde mit Hilfe eines Speed Mixer (Hausschild Engineering, Typ DAC 150.1 FVZ) bei 2750 U/min 1min. Danach wurden die Klarlacke auf einer Glasplatte mit Hilfe eines 100µm Filmziehrahmens (Byk Gardner) aufgezogen und in einem Umluft-Lacktrockenschrank 10 Minuten bei 140°C getrocknet. Nach dem Abkühlen (10 min RT) wurden die Filme visuell beurteilt und die ersten Pendeldämpfungen nach König gemessen.

| | | **Vergleich** | **Erfindungsgemäß** | **Vergleich** | **Erfindungsgemäß** |
|---|---|---|---|---|---|
| **Beispiel** | | **5** | **6** | **7** | **8** |
| Produkt gemäß Beispiel 4 | | 30,00 g | 30,00 g | 30,00 g | 30,00 g |
| Kat. 1 | | | 0,94 g | | 0,94 g |
| Kat. 2 | | | | 1,50 g | 1,50 g |
| Gesamtmenge Produkt + Katalysator | | 30,00 g | 30,94 g | 31,50 g | 32,44 g |
| Härtung: 10 min, 140 °C | | | | | |
| **Aussehen der Beschichtung** | | klar, nass | klar, trocken | klar, trocken jedoch gummiartig, abkratzbar | klar, trocken |
| **Pendeldämpfung** | sofort | nicht messbar | 14s | nicht messbar | 13 s |
| | n. 1d RT | - | 17 s | - | 20 s |
| | n. 3d RT | - | 17 s | - | 18 s |
| | n. 7d RT | - | 45 s | - | 22 s |
| | n. 14d RT | - | 70 s | - | 30 s |
| **Lösemittelbeständigkeit** nach 5 Min.; Platten nach 14d RT | Xylol | - | 1 | - | 0 |
| | 1-Methoxypropyl acaetat-2 | - | 1 | - | 0 |
| | Ethylacetat | - | 2 | - | 2 |
| | Aceton | - | 2 | - | 2 |

| | | | | | |
|---|---|---|---|---|---|
| - = nicht gemessen | | | | | |

Um die Vollständigkeit der NCO-Reaktion nachzuweisen, wurde die NCO-Abnahme mittels IR-Spektroskopie für die Zusammensetzungen gemäß der Beispiele 6 und 8 untersucht.

Die Herstellung der Beschichtungsmittel erfolgte indem die silanmodifizierten Polyisocyanate mit den Katalysatoren und deren Mischungen eingewogen wurden und anschließend im Speed Mixer (Hausschild Engeneering, Typ DAC 150.1 FVZ) bei 2750 U/min 1min verrührt wurden.

| Zusammensetzung nach Beispiel | **6** | **8** |
|---|---|---|
| | ***Integration NCO (2380-2170) cm⁻¹*** | |
| flüssig | 100 % | 100 % |
| trocken, unmittelbar nach Härtung | 1 % | 1 % |

Die Prüflacke wurden direkt (Nasslack) mit einem FT-IR Spektrometer (Tensor II mit Platinum-ATR-Einheit (Diamantkristall) der Fa. Bruker) vermessen. Danach wurden der Klarlack auf einer Glasplatte mit Hilfe eines 100 µm Filmziehrahmen aufgezogen und in einem Umluft-Lacktrockenschrank 10 Minuten bei 140°C gehärtet und dann unmittelbar nach dem Einbrennprozess als Klarlackfilm abgetrennt und erneut vermessen.

Zur Charakterisierung der Isocyanat-Reaktion wird die Intensität des NCO-Peaks (mit Hilfe einer Integration im Wellenzahl-Bereich von 2380-2170 cm⁻¹ verfolgt, wobei die erste Messung vom Nasslackmaterial, nach Mischung der Komponenten, als Ausgangswert auf 100% gesetzt wird. Alle weiteren Messungen (nach Applikation, Temperaturbehandlung und/ oder Lagerung) werden dann relativ zum Ausgangswert berechnet (Verhältnisbildung).

Bei der Messung auf einem ATR-Kristall ist die Intensität des Spektrums von der Eindringtiefe des IR-Strahls in das zu messende Material und der Belegung der Kristallfläche abhängig. Diese Eindringtiefe ist wiederum vom Brechungsindex des Materials abhängig. Da sich der Brechungsindex des Nasslackes vom Brechungsindex des eingebrannten Klarlackfilms unterscheidet und eine vergleichbare Belegung der Kristallfläche bei unterschiedlichen Messungen (am Nasslack bzw. am Klarlack) nicht sichergestellt werden kann, muss für die Verhältnisbildung eine Korrektur beider Effekte vorgenommen werden, indem alle Spektren auf den Peak der CH-Streckschwingung normiert werden (Wellenzahl-Bereich 3000-2800 cm⁻¹).

Die Beispiele 6 und 8 (erfindungsgemäß) zeigen im Gegensatz zu den Vergleichsbeispielen 5 und 7, dass nur bei Anwesenheit des Katalysator Kat.1, die Trimerisierungsreaktion startet. Die IR-Messungen belegen, den nahezu vollständigen Umsatz der NCO-Gruppen. Die anschließende Nachhärtung bei Lagerung ist dann dem zweiten Härtungsmechanismus der Alkoxysilylgruppen zuzuschreiben. Ohne Katalysator (5) bzw. nur mit einem Katalysator (7), der die Hydrolyse/Kondensation von Alkoxysilylgruppen bei der gewählten Temperatur katalysiert, werden keine ausgehärteten Filme erzeugt.

| | | Erfindungsgemäß | Erfindungsgemäß | Erfindungsgemäß | Erfindungsgemäß |
|---|---|---|---|---|---|
| **Beispiel** | | **8** | **9** | **10** | **11** |
| Produkt gemäß Beispiel 4 | | 30,00 g | | | |
| Produkt gemäß Beispiel 1 | | | 30,00 g | | |
| Produkt gemäß Beispiel 2 | | | | 30,00 g | |
| Produkt gemäß Beispiel 3 | | | | | 30,00 g |
| Kat. 1 | | 0,94 g | 0,94 g | 0,94 g | 0,94 g |
| Kat. 2 | | 1,50 g | 1,50 g | 1,50 g | 1,50 g |
| Gesamtmenge Produkt + Katalysator | | 32,44 g | 32,44 g | 32,44 g | 32,44 g |
| Härtung: 10 min, 140 °C | | | | | |
| **Aussehen der Beschichtung** | | klar, trocken | klar, trocken | klar, trocken | klar, trocken |
| **Pendeldämpfung** | sofort | 13 s | 24 s | 24 s | 63 s |
| | n. 1d RT | 20 s | 112 s | 70 s | 78 s |
| | n. 3d RT | 18 s | 166 s | 155 s | 161s |
| | n. 7d RT | 22 s | 173 s | 184 s | 176 s |
| | n. 14d RT | 30 s | 180 s | 195 s | 184 s |
| **Lösemittelbestandigkeit** 5 Min.; Platten nach 14d RT | Xylol | 0 | 0 | 1 | 1 |
| | 1-Methoxyprop ylacaetat-2 | 0 | 0 | 1 | 1 |
| | Ethylacetat | 2 | 1 | 2 | 2 |
| | Aceton | 2 | 2 | 2 | 2 |

Die Beispiele 8 bis 11 zeigen, dass sich die Eigenschaften der erfindungsgemäßen Polyisocyanuratkunststoffe in Bezug auf Härte und Lösemittelbeständigkeit variieren lassen..

Die Kratzfestigkeit der 21 Tage gelagerten beschichteten Glasplatten gemäß Beispiel 6, 8, 9, 10 und 11 wurde im Vergleich zu einem zweikomponentigen Polyurethanklarlack geprüft. Als Vergleichsbeispiel 12 wurden Setalux^{®} D A 665 BA/X,65 % in Butylacetat/Xylol (3:1) (Polyacrylatpolyol Fa. Nuplex, DE) 49,06 g, BYK-331, 10% in 1-Methoxypropylacetat-2 (Verlaufshilfsmittel Fa. BYK, DE) 0,50 g, mit Desmodur^{®} N 3300 16,56 g mit Hilfe eines Speed Mixer (Hausschild Engineering, Typ DAC 150.1 FVZ) bei 2750 U/min 1min gemischt. Danach wurde der Klarlack auf einer Glasplatte mit Hilfe eines 100 µm Filmziehrahmens (Byk Gardner) aufgezogen und in einem Umluft-Lacktrockenschrank 30 Minuten bei 140°C getrocknet. Der Lack gemäß Vergleichsbeispiel 12 wurde ebenfalls 21 Tage bei RT gelagert.

Die Bestimmung der Kratzfestigkeit mittels Hammertest ergab folgende Werte:

| **Beispiel** | **6** | **8** | **9** | **10** | **11** | **12** |
|---|---|---|---|---|---|---|
| | Erfindungsgemäß | Erfindungsgemäß | Erfindungsgemäß | Erfindungsgemäß | Erfindungsgemäß | Vergleich |
| Delta Haze | 122 | 92 | 60 | 81 | 139 | 216 |

Die erfindungsgemäßen Beispiele weisen einen geringeren Anstieg des Haze bei Verkratzung mit Stahlwolle als der Vergleich auf.

## Patentansprüche

1. Polyisocyanuratkunststoff enthaltend Siloxangruppen, erhältlich durch ein Verfahren umfassend die folgenden Schritte:
a1) Bereitstellen einer Zusammensetzung A), welche
i) oligomere Polyisocyanate B) und Silicium-haltige Verbindungen C) enthält oder
ii) oligomere, Silicium-modifizierte Polyisocyanate D) enthält; oder
iii) oligomere Silicium-modifizierte Polyisocyanate D) und oligomere Polyisocyanate B) enthält; oder
iv) oligomere Polyisocyanate B), Silicium-haltige Verbindungen C) und modifizierte oligomere Polyisocyanate D) enthält; oder
v) Silicium-haltige Verbindungen C) und Silicium-modifizierte, oligomere Polyisocyanate D) enthält;
a2) katalytische Trimerisierung der Zusammensetzung A);
wobei die Zusammensetzung A) einen Gehalt an monomeren Diisocyanaten von höchstens 20 Gew.-% aufweist;
wobei höchstens 20 % der ursprünglich in der Zusammensetzung A) enthaltenen Isocyanatgruppen erhalten geblieben sind; und
wobei es sich bei den Silicium-haltigen Verbindungen C) um Alkoxysilylgruppenhaltige Verbindungen C) handelt und es sich bei den oligomeren Silicium-modifizierten Polyisocyanaten D) um oligomere mit Alkoxysilylgruppen modifizierte Polyisocyanate D) handelt.

2. Polyisocyanuratkunststoff enthaltend Siloxangruppen gemäß Anspruch 1, **dadurch gekennzeichnet, dass** die Silicium-haltige Verbindungen C) mindestens eine mit Isocyanatgruppen reaktive funktionelle Gruppe aufweist.

3. Polyisocyanuratkunststoff enthaltend Siloxangruppen gemäß Anspruch 1 oder 2, **dadurch gekennzeichnet, dass** die Silicium-haltigen Verbindungen C) ausgewählt sind aus der Gruppe, bestehend aus oligomeren Silicium-modifizierten Polyisocyanaten D), Aminosilanen E), silanfunktionellen Asparaginsäureestern F), silanfunktionellen Alkylamiden G), Mercaptosilanen H), Isocyanato-Silanen I) und Mischungen davon.

4. Polyisocyanuratkunststoff enthaltend Siloxangruppen gemäß einem der Ansprüche 1 bis 3, **dadurch gekennzeichnet, dass** die Silicium-haltigen Verbindungen C) und die oligomeren, Silicium-modifizierten Polyisocyanate D) mindestens eine Struktureinheit gemäß Formel (V) aufweisen 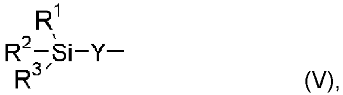 wobei
R¹, R² und R³ jeweils für Methyl, Methoxy und/oder Ethoxy, stehen, mit der Maßgabe, dass mindestens einer der Reste R¹, R² und R³ für einen solchen Methoxy- oder Ethoxyrest steht, und
Y für einen linearen oder verzweigten organischen Rest mit mindestens 1 Kohlenstoffatom steht.

5. Polyisocyanuratkunststoff enthaltend Siloxangruppen gemäß Anspruch 4, **dadurch gekennzeichnet, dass** die Silicium-haltigen Verbindungen C) und die oligomeren, Silicium-modifizierten Polyisocyanate D) mindestens eine Struktureinheit aufweisen, ausgewählt aus der Gruppe, bestehend aus
a) einer Struktureinheit der Formel (I) 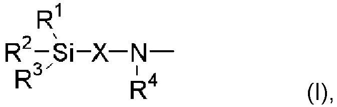 wobei
R¹, R² und R³ jeweils für Methyl, Methoxy und/oder Ethoxy, stehen, mit der Maßgabe, dass mindestens einer der Reste R¹, R² und R³ für einen solchen Methoxy- oder Ethoxyrest steht,
X für einen Propylenrest (-CH₂-CH₂-CH₂-) steht, und
R⁴ für Wasserstoff, einen Methylrest oder einen Rest der Formel 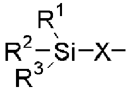 steht, in welchem R¹, R², R³ und X die vorstehend angegebene Bedeutung haben;
b) einer Struktureinheit der Formel (II) 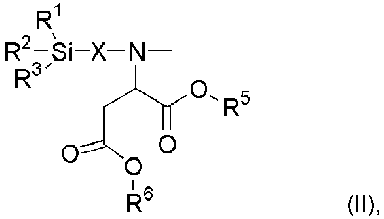 wobei
R¹, R², R³ und X wobei R¹, R² und R³ die für Formel (I) genannte Bedeutung haben,
R⁵ und R⁶ für gleiche oder verschiedene Reste stehen und einen Methyl-, Ethyl-, n-Butyl-oder 2-Ethylhexylrest bedeuten;
c) einer Struktureinheit der Formel (III) 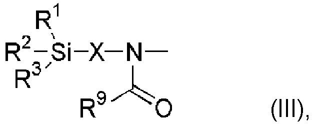 wobei
R¹, R², R³ und X wobei R¹, R² und R³ die für Formel (I) genannte Bedeutung haben,
R⁹ für Wasserstoff steht; und
d) einer Struktureinheit der Formel (IV) 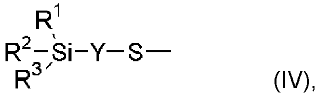 wobei
R¹, R² und R³ wobei R¹, R² und R³ die für Formel (I) genannte Bedeutung haben,
Y für einen Propylenrest (-CH₂-CH₂-CH₂-) steht.

6. Polyisocyanuratkunststoff enthaltend Siloxangruppen gemäß einem der Ansprüche 1 bis 5, **dadurch gekennzeichnet, dass** die oligomeren Polyisocyanate B) oder die oligomeren, Silicium-modifizierten Polyisocyanate D) ausgewählt sind aus mindestens einem oligomeren Polyisocyanat mit Uretdion-, Isocyanurat-, Allophanat-, Biuret-, Iminooxadiazindion- oder Oxadiazintrionstruktur oder deren Mischungen.

7. Polyisocyanuratkunststoff enthaltend Siloxangruppen gemäß einem der Ansprüche 1 bis 6, **dadurch gekennzeichnet, dass** die oligomeren Polyisocyanate B) oder die oligomeren, Silicium-modifizierten Polyisocyanate D) aus ein oder mehreren oligomeren Polyisocyanaten bestehen, die aus 1,5-Diisocyanatopentan, 1,6-Diisocyanatohexan, Isophorondiisocyanat oder 4,4'-Diisocyanatodicyclohexylmethan oder deren Mischungen aufgebaut sind.

8. Polyisocyanuratkunststoff enthaltend Siloxangruppen gemäß einem der Ansprüche 1 bis 7, **dadurch gekennzeichnet, dass** die katalytische Trimerisierung in Gegenwart eines Trimerisierungskatalysators L) stattfindet.

9. Polyisocyanuratkunststoff enthaltend Siloxangruppen gemäß Anspruch 8, **dadurch gekennzeichnet, dass** der Trimerisierungskatalysator L) mindestens ein Alkalimetallsalz oder Erdalkalimetallsalzumfasst.

10. Polyisocyanuratkunststoff enthaltend Siloxangruppen gemäß Anspruch 8 oder 9, **dadurch gekennzeichnet, dass** der Trimerisierungskatalysator L) einen Polyether, umfasst.

11. Polyisocyanuratkunststoff enthaltend Siloxangruppen gemäß einem der Ansprüche 1 bis 10, **dadurch gekennzeichnet, dass** die Zusammensetzung A) einen Gehalt an monomeren Diisocyanaten von höchstens 15 Gew.-% bezogen auf das Gewicht der Zusammensetzung A), aufweist.

12. Verwendung eines Polyisocyanuratkunststoffs enthaltend Siloxangruppen gemäß einem der Ansprüche 1 bis 11 zur Herstellung von Beschichtungen, Folien, Halbzeugen und Formteilen.

13. Beschichtungen, Folien, Halbzeuge und Formteile enthaltend einen Polyisocyanuratkunststoff enthaltend Siloxangruppen gemäß einem der Ansprüche 1 bis 11.

14. Substrat, beschichtet mit einer Beschichtung gemäß Anspruch 13, wobei das Substrat insbesondere ausgewählt sein kann aus einer Fahrzeugkarosserie, und Unterhaltungselektronikgegenständen.

15. Verfahren zur Herstellung eines Polyisocyanuratkunststoffs enthaltend Siloxangruppen umfassend die folgenden Schritte:
a1) Bereitstellen einer Zusammensetzung A), welche
i) oligomere Polyisocyanate B) und Silicium-haltige Verbindungen C) enthält oder
ii) oligomere, Silicium-modifizierte Polyisocyanate D) enthält; oder
iii) oligomere Silicium-modifizierte Polyisocyanate D) und oligomere Polyisocyanate B) enthält; oder
iv) oligomere Polyisocyanate B), Silicium-haltige Verbindungen C) und modifizierte oligomere Polyisocyanate D) enthält; oder
v) Silicium-haltige Verbindungen C) und Silicium-modifizierte, oligomere Polyisocyanate D) enthält;
a2) katalytische Trimerisierung der Zusammensetzung A);
wobei die Zusammensetzung A) einen Gehalt an monomeren Diisocyanaten von höchstens 20 Gew.-% aufweist;
wobei die katalytische Trimerisierung mindestens bis zu einem Umsetzungsgrad fortgesetzt wird, bei dem nur noch höchstens 20 % der ursprünglich in der Zusammensetzung A) enthaltenen Isocyanatgruppen vorhanden sind, so dass ein hochumgesetzter Polyisocyanuratkunststoff enthaltend Siloxangruppen erhalten wird; und
wobei es sich bei den Silicium-haltigen Verbindungen C) um Alkoxysilylgruppenhaltige Verbindungen C) handelt und es sich bei den oligomeren Silicium-modifizierten Polyisocyanaten D) um oligomere mit Alkoxysilylgruppen modifizierte Polyisocyanate D) handelt.

16. Verfahren gemäß Anspruch 15, **dadurch gekennzeichnet, dass** die katalytische Trimerisierung in Gegenwart eines Trimerisierungskatalysators L) stattfindet, der wie in einem der Ansprüche 9 oder 10 definiert ist.

17. Verfahren gemäß Anspruch 15 oder 16, **dadurch gekennzeichnet, dass** die Silicium-haltigen Verbindungen C) und/oder die oligomeren, Silicium-modifizierten Polyisocyanate D) wie in Anspruch 2 bis 7 definiert sind und/oder dass die Zusammensetzung A) wie in Anspruch 11 definiert ist.

## Claims

1. Polyisocyanurate plastic containing siloxane groups, obtainable by a process comprising the steps of:
a1) providing a composition A) which
i) contains oligomeric polyisocyanates B) and silicon-containing compounds C); or
ii) contains oligomeric silicon-modified polyisocyanates D); or
iii) contains oligomeric silicon-modified polyisocyanates D) and oligomeric polyisocyanates B); or
iv) contains oligomeric polyisocyanates B), silicon-containing compounds C) and modified oligomeric polyisocyanates D); or
v) contains silicon-containing compounds C) and silicon-modified, oligomeric polyisocyanates D) ;
a2) catalytic trimerization of the composition A);
wherein the composition A) has a content of monomeric diisocyanates of not more than 20% by weight;
wherein not more than 20% of the isocyanate groups originally contained in the composition A) have been preserved; and
wherein the silicon-containing compounds C) are alkoxysilyl-containing compounds C) and the oligomeric silicon-modified polyisocyanates D) are oligomeric polyisocyanates D) modified with alkoxysilyl groups.

2. Polyisocyanurate plastic containing siloxane groups according to Claim 1, **characterized in that** the silicon-containing compounds C) has at least one isocyanate-reactive functional group.

3. Polyisocyanurate plastic containing siloxane groups according to Claim 1 or 2, **characterized in that** the silicon-containing compounds C) are selected from the group consisting of oligomeric silicon-modified polyisocyanates D), aminosilanes E), silane-functional aspartic esters F), silane-functional alkylamides G), mercaptosilanes H), isocyanatosilanes I) and mixtures thereof.

4. Polyisocyanurate plastic containing siloxane groups according to any of Claims 1 to 3, **characterized in that** the silicon-containing compounds C) and the oligomeric silicon-modified polyisocyanates D) comprise at least one structural unit according to formula (V) 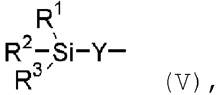 wherein
R¹, R² and R³ are each methyl, methoxy and/or ethoxy, with the proviso that at least one of the radicals R¹, R² and R³ is such a methoxy or ethoxy radical, and
Y is a linear or branched organic radical having at least 1 carbon atom.

5. Polyisocyanurate plastic containing siloxane groups according to Claim 4, **characterized in that** the silicon-containing compounds C) and the oligomeric silicon-modified polyisocyanates D) comprise at least one structural unit selected from the group consisting of
a) a structural unit of formula (I) 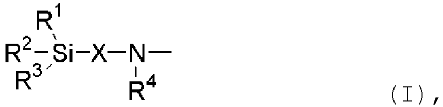 wherein
R¹, R² and R³ are each methyl, methoxy and/or ethoxy, with the proviso that at least one of the radicals R¹, R² and R³ is such a methoxy or ethoxy radical,
X is a propylene radical (-CH₂-CH₂-CH₂-), and
R⁴ is hydrogen, a methyl radical or a radical of formula 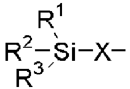 in which R¹, R², R³ and X are as defined above;
b) a structural unit of formula (II) 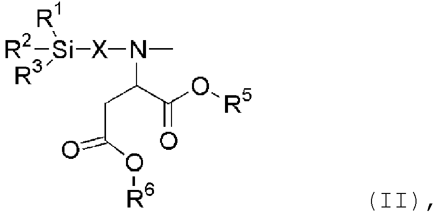 wherein
R¹, R², R³ and X wherein R¹, R² and R³ are as defined for formula (I),
R⁵ and R⁶ are identical or different radicals and are a methyl-, ethyl-, n-butyl- or 2-ethylhexyl radical;
c) a structural unit of formula (III) 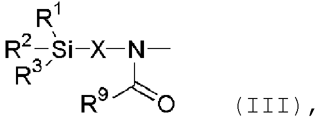 wherein
R¹, R², R³ and X wherein R¹, R² and R³ are as defined for formula (I),
R⁹ is hydrogen; and
d) a structural unit of formula (IV) 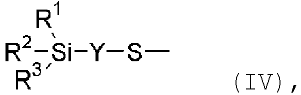 wherein
R¹, R² and R³ wherein R¹, R² and R³ are as defined for formula (I),
Y is a propylene radical (-CH₂-CH₂-CH₂-) .

6. Polyisocyanurate plastic containing siloxane groups according to any of Claims 1 to 5, **characterized in that** the oligomeric polyisocyanates B) or the oligomeric, silicon-modified polyisocyanates D) are selected from at least one oligomeric polyisocyanate having uretdione, isocyanurate, allophanate, biuret, iminooxadiazinedione or oxadiazinetrione structure or mixtures thereof.

7. Polyisocyanurate plastic containing siloxane groups according to any of Claims 1 to 6, **characterized in that** the oligomeric polyisocyanates B) or the oligomeric, silicon-modified polyisocyanates D) consist of one or more oligomeric polyisocyanates formed from 1,5-diisocyanatopentane, 1,6-diisocyanatohexane, isophorone diisocyanate or 4,4'-diisocyanatodicyclohexylmethane or mixtures thereof.

8. Polyisocyanurate plastic containing siloxane groups according to any of Claims 1 to 7, **characterized in that** the catalytic trimerization is carried out in the presence of a trimerization catalyst L).

9. Polyisocyanurate plastic containing siloxane groups according to Claim 8, **characterized in that** the trimerization catalyst L) comprises at least one alkali metal salt or alkaline earth metal salt.

10. Polyisocyanurate plastic containing siloxane groups according to Claim 8 or 9, **characterized in that** the trimerization catalyst L) comprises a polyether.

11. Polyisocyanurate plastic containing siloxane groups according to any of Claims 1 to 10, **characterized in that** the composition A) has a content of monomeric diisocyanates of not more than 15% by weight, based on the weight of the composition A).

12. Use of a polyisocyanurate plastic containing siloxane groups according to any of Claims 1 to 11 for producing coatings, films, semifinished products and moldings.

13. Coating, film, semifinished product or molding containing a polyisocyanurate plastic containing siloxane groups according to any of Claims 1 to 11.

14. Substrate coated with a coating according to Claim 13, wherein the substrate may in particular be selected from a vehicle body and electronic entertainment devices.

15. Process for producing a polyisocyanurate plastic containing siloxane groups comprising the steps of:
a1) providing a composition A) which
i) contains oligomeric polyisocyanates B) and silicon-containing compounds C); or
ii) contains oligomeric silicon-modified polyisocyanates D); or
iii) contains oligomeric silicon-modified polyisocyanates D) and oligomeric polyisocyanates B); or
iv) contains oligomeric polyisocyanates B), silicon-containing compounds C) and modified oligomeric polyisocyanates D); or
v) contains silicon-containing compounds C) and silicon-modified, oligomeric polyisocyanates D);
a2) catalytic trimerization of the composition A);
wherein the composition A) has a content of monomeric diisocyanates of not more than 20% by weight;
wherein the catalytic trimerization is continued at least up to a degree of conversion at which only not more than 20% of the isocyanate groups originally contained in the composition A) remain present, so that a highly converted polyisocyanurate plastic containing siloxane groups is obtained; and
wherein the silicon-containing compounds C) are alkoxysilyl-containing compounds C) and the oligomeric silicon-modified polyisocyanates D) are oligomeric polyisocyanates D) modified with alkoxysilyl groups.

16. Process according to Claim 15, **characterized in that** the catalytic trimerization is carried out in the presence of a trimerization catalyst L) which is defined as in either of Claims 9 or 10.

17. Process according to Claim 15 or 16, **characterized in that** the silicon-containing compounds C) and/or the oligomeric, silicon-modified polyisocyanates D) are defined as in Claims 2 to 7 and/or **in that** the composition A) is defined as in Claim 11.

## Revendications

1. Matériau synthétique à base de polyisocyanurate contenant des groupes siloxane, pouvant être obtenu par un procédé comprenant les étapes suivantes :
a1) mise à disposition d'une composition A), qui contient
i) des polyisocyanates oligomères B) et des composés contenant du silicium C) ou
ii) des polyisocyanates oligomères, modifiés par silicium D) ; ou
iii) des polyisocyanates oligomères, modifiés par silicium D) et des polyisocyanates oligomères B) ; ou
iv) des polyisocyanates oligomères B), des composés contenant du silicium C) et des polyisocyanates oligomères modifiés D) ; ou
v) des composés contenant du silicium C) et des polyisocyanates oligomères modifiés par silicium D) ;
a2) trimérisation catalytique de la composition A) ;
la composition A) présentant une teneur en diisocyanates monomères d'au plus 20% en poids ;
au plus 20% des groupes isocyanate contenus initialement dans la composition A) ayant été conservés ; et
les composés contenant du silicium C) étant des composés contenant des groupes alcoxysilyle C) et les polyisocyanates oligomères modifiés par silicium D) étant des polyisocyanates oligomères modifiés par des groupes alcoxysilyle D).

2. Matériau synthétique à base de polyisocyanurate contenant des groupes siloxane selon la revendication 1, **caractérisé en ce que** les composés contenant du silicium C) présentent au moins un groupe fonctionnel réactif avec des groupes isocyanate.

3. Matériau synthétique à base de polyisocyanurate contenant des groupes siloxane selon la revendication 1 ou 2, **caractérisé en ce que** les composés contenant du silicium C) sont choisis dans le groupe constitué par les polyisocyanates oligomères modifiés par silicium D), les aminosilanes E), les esters d'acide aspartique à fonctionnalité silane F), les alkylamides à fonctionnalité silane G), les mercaptosilanes H), les isocyanatosilanes I) et leurs mélanges.

4. Matériau synthétique à base de polyisocyanurate contenant des groupes siloxane selon l'une des revendications 1 à 3, **caractérisé en ce que** les composés contenant du silicium C) et les polyisocyanates oligomères, modifiés par silicium D) présentent au moins un motif structural selon la formule (V) 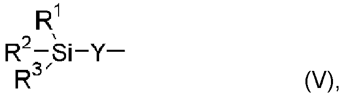 dans laquelle
R¹, R² et R³ représentent à chaque fois méthyle, méthoxy et/ou éthoxy, sous réserve qu'au moins l'un des radicaux R¹, R² et R³ représente un tel radical méthoxy ou éthoxy et
Y représente un radical organique linéaire ou ramifié comprenant au moins 1 atome de carbone.

5. Matériau synthétique à base de polyisocyanurate contenant des groupes siloxane selon la revendication 4, **caractérisé en ce que** les composés contenant du silicium C) et les polyisocyanates oligomères, modifiés par silicium D) présentent au moins un motif structural choisi dans le groupe constitué par
a) un motif structural de formule (I) 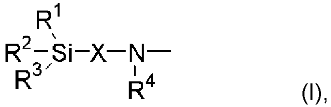 dans laquelle
R¹, R² et R³ représentent à chaque fois méthyle, méthoxy et/ou éthoxy, sous réserve qu'au moins l'un des radicaux R¹, R² et R³ représente un tel radical méthoxy ou éthoxy,
X représente un radical propylène (-CH₂-CH₂-CH₂-) et
R⁴ représente hydrogène, un radical méthyle ou un radical de formule 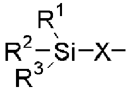 dans laquelle R¹, R², R³ et X ont la signification indiquée ci-dessus ;
b) un motif structural de formule (II) 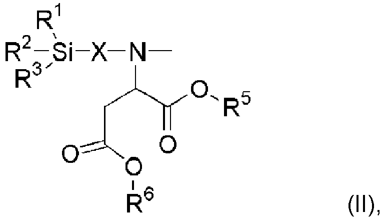 dans laquelle
R¹, R², R³ et X R¹, R² et R³ présentant la signification mentionnée pour la formule (I),
R⁵ et R⁶ représentent des radicaux identiques ou différents et signifient un radical méthyle, éthyle, n-butyle ou 2-éthylhexyle ;
c) un motif structural de formule (III) 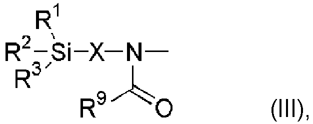 dans laquelle
R¹, R², R³ et X R¹, R² et R³ présentant la signification mentionnée pour la formule (I),
R⁹ représente hydrogène ; et
d) un motif structural de formule (IV) 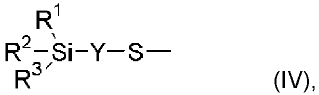 dans laquelle
R¹, R² et R³ R¹, R² et R³ présentant la signification mentionnée pour la formule (I),
Y représente un radical propylène (-CH₂-CH₂-CH₂-).

6. Matériau synthétique à base de polyisocyanurate contenant des groupes siloxane selon l'une des revendications 1 à 5, **caractérisé en ce que** les polyisocyanates oligomères B) ou les polyisocyanates oligomères modifiés par silicium D) sont choisis parmi au moins un polyisocyanate oligomère présentant une structure uretdione, isocyanurate, allophanate, biuret, iminooxadiazinedione ou oxadiazinetrione ou leurs mélanges.

7. Matériau synthétique à base de polyisocyanurate contenant des groupes siloxane selon l'une des revendications 1 à 6, **caractérisé en ce que** les polyisocyanates oligomères B) ou les polyisocyanates oligomères, modifiés par silicium D) sont constitués par un ou plusieurs polyisocyanates oligomères qui sont constitués de 1,5-diisocyanatopentane, de 1,6-diisocyanatohexane, de diisocyanate d'isophorone ou de 4,4'-diisocyanatodicyclohexylméthane ou de leurs mélanges.

8. Matériau synthétique à base de polyisocyanurate contenant des groupes siloxane selon l'une des revendications 1 à 7, **caractérisé en ce que** la trimérisation catalytique a lieu en présence d'un catalyseur de trimérisation L).

9. Matériau synthétique à base de polyisocyanurate contenant des groupes siloxane selon la revendication 8, **caractérisé en ce que** le catalyseur de trimérisation L) comprend au moins un sel de métal alcalin ou alcalino-terreux.

10. Matériau synthétique à base de polyisocyanurate contenant des groupes siloxane selon la revendication 8 ou 9, **caractérisé en ce que** le catalyseur de trimérisation L) comprend un polyéther.

11. Matériau synthétique à base de polyisocyanurate contenant des groupes siloxane selon l'une des revendications 1 à 10, **caractérisé en ce que** la composition A) présente une teneur en diisocyanates monomères d'au plus 15% en poids, par rapport au poids de la composition A).

12. Utilisation d'un matériau synthétique à base de polyisocyanurate contenant des groupes siloxane selon l'une des revendications 1 à 11 pour la fabrication de revêtements, de feuilles, de produits semi-finis et de pièces façonnées.

13. Revêtements, feuilles, produits semi-finis et pièces façonnées contenant un matériau synthétique à base de polyisocyanurate contenant des groupes siloxane selon l'une des revendications 1 à 11.

14. Substrat, revêtu par un revêtement selon la revendication 13, le substrat pouvant en particulier être choisi parmi une carrosserie de véhicule et des objets électroniques grand public.

15. Procédé pour la fabrication d'un matériau synthétique à base de polyisocyanurate contenant des groupes siloxane, comprenant les étapes suivantes :
a1) mise à disposition d'une composition A), qui contient
i) des polyisocyanates oligomères B) et des composés contenant du silicium C) ou
ii) des polyisocyanates oligomères, modifiés par silicium D) ; ou
iii) des polyisocyanates oligomères, modifiés par silicium D) et des polyisocyanates oligomères B) ; ou
iv) des polyisocyanates oligomères B), des composés contenant du silicium C) et des polyisocyanates oligomères modifiés D) ; ou
v) des composés contenant du silicium C) et des polyisocyanates oligomères modifiés par silicium D) ;
a2) trimérisation catalytique de la composition A) ;
la composition A) présentant une teneur en diisocyanates monomères d'au plus 20% en poids ;
la trimérisation catalytique étant poursuivie au moins jusqu'à un degré de transformation auquel il ne reste plus qu'au plus 20% des groupes isocyanate contenus initialement dans la composition A), de telle sorte qu'un matériau synthétique à base de polyisocyanurate contenant des groupes siloxane, hautement transformé, est obtenu ; et
les composés contenant du silicium C) étant des composés contenant des groupes alcoxysilyle C) et les polyisocyanates oligomères modifiés par silicium D) étant des polyisocyanates oligomères modifiés par des groupes alcoxysilyle D).

16. Procédé selon la revendication 15, **caractérisé en ce que** la trimérisation catalytique a lieu en présence d'un catalyseur de trimérisation L) qui est défini comme dans l'une des revendications 9 ou 10.

17. Procédé selon la revendication 15 ou 16, **caractérisé en ce que** les composés contenant du silicium C) et/ou les polyisocyanates oligomères, modifiés par silicium, D) sont définis comme dans la revendication 2 à 7 et/ou la composition est définie comme dans la revendication 11.
